# EUROPÄISCHE PATENTSCHRIFT

(11) **EP 2 309 864 B1**
(45) Veröffentlichungstag und Bekanntmachung des Hinweises auf die Patenterteilung: **11.09.2013**
(21) Anmeldenummer: 09776144.9
(22) Anmeldetag: 10.07.2009
(51) Int. Cl.: A21B 3/04, F24C 3/08, F23D 14/02, F23D 14/34, F23D 14/58

(54) **NAHRUNGSMITTELBEHANDLUNGSGERÄT**
FOOD TREATMENT APPLIANCE
APPAREIL DE TRAITEMENT DE PRODUITS ALIMENTAIRES

(30) Priorität: 14.07.2008 DE 102008032833
(43) Veröffentlichungstag der Anmeldung: 20.04.2011
(73) Patentinhaber: Rational AG, 86899 Landsberg/Lech (DE)
(72) Erfinder: LICHTENSTERN, Manfred, 86947 Weil/Petzenhausen (DE); OTMINGHAUS, Rainer, 86899 Landsberg (DE); RUSCHE, Stefan, 86862 Lamerdingen (DE); SCHREINER, Thomas, 86916 Kaufering (DE)
(74) Vertreter: Weber-Bruls, Dorothée
(86) Internationale Anmeldenummer: PCT/DE2009/075037
(87) Internationale Veröffentlichungsnummer: WO 2010/006598

(56) Entgegenhaltungen:
- EP-A1- 0 694 735
- EP-A1- 1 431 658
- DE-A1- 2 134 749
- DE-A1- 2 211 297
- DE-A1- 10 220 624
- US-A- 5 749 720
- US-B1- 6 623 267

## Beschreibung

Die vorliegende Erfindung betrifft ein Nahrungsmittelbehandlungsgerät, insbesondere Gargerät nach dem Oberbegriffs des Patentanspruchs 1.

Aus dem Stand der Technik ist eine Vielzahl von Nahrungsmittelbehandlungsgeräten bekannt. So offenbart beispielsweise die DE 26 44 839 A1 einen Luftzirkulationsofen. Bei diesem Luftzirkulationsofen wird ein über eine Wärmequelle erhitztes Fluid mittels eines Zirkulationsluftgebläses durch einen Backraum zirkuliert, um gleichzeitig einen Massenwärmespeicher einer Verdampfervorrichtung zu erhitzen. Nachteilig bei diesem Ofen ist jedoch, dass eine Dampferzeugung unabhängig von einer Erwärmung des Backraums nicht möglich ist. Ein weiteres Nahrungsmittelbehandlungsgerät ist beispielsweise aus der DE 102 33 340 A1 bekannt.

Um eine getrennte Heißlufterzeugung und Dampferzeugung durchführen zu können schlägt die EP 1 330 953 A1 ein Brennersystem mit mehreren Wärmeübertragungssystemen und ein Gargerät mit solch einem Brennersystem vor. Dabei ist vorgesehen, dass zwei Brenner nur eine Gasarmatur für Brenngas und nur ein Gebläse für Luft aufweisen um mit einem Brennfluid versorgt zu werden, wobei ein Brenner zur Erzeugung von Heißluft und ein Brenner zur Erzeugung von Dampf eingesetzt wird. Auch wird vorgeschlagen, dass zwei Wärmeübertragungssysteme mit von nur einem Brenner erzeugter Wärme durch Zufuhr von Verbrennungsgasen beaufschlagbar sind, um insbesondere den Platzbedarf des Brennersystem zu verringern. Dabei werden über den Brenner zur Verfügung gestellte Verbrennungsgase über ein Dreiwegeventil geregelt jeweiligen Verbrennungsgaszufuhrleitungen zugeführt, die mit voneinander getrennten Wärmetauschern in Wirkverbindung stehen.

Aus der DE 102 20 624 A1 ist ein gattungsgemäßes Gargerät in Form eines gemischten Backofens mit hoher Leistung zum Backen mit Konvektion und/oder Dämpfen bekannt. Es ist vorgesehen, dass in eine Expansionskammer ein Brenner mündet, wobei die Verbrennungsgase des Brenners einer zweiten Kammer in Form einer Verteilungskammer zugeführt werden, um von dort in Rohre zur Erwärmung einer Garraumatmosphäre geführt zu werden. Darüber hinaus werden Verbrennungsgase aus der Expansionskammer über eine Verbindung einem Wärmetauscher zur Erzeugung von Dampf zugeführt.

Bei Einsatz des Brennersystems, insbesondere in einem gasbeheizten Kombidämpfer, d.h. einem Gargerät, bei welchem ein Garvorgang mittels Heißluft und/oder Dampf durchgeführt wird, führt ein Brennersystem, bei dem je ein Brenner zur Dampferzeugung und zur Erzeugung von Heißluft vorgesehen ist, zu erhöhten Kosten und einem erhöhten Platzbedarf. Darüber hinaus ist bei einem Wechsel von Heißluft zur Dampferzeugung oder umgekehrt für jeden der Brenner ein Spülzyklus durchzuführen, so dass ein rasches Umschalten zwischen einer Dampferzeugung und einer Heißlufterzeugung nur beschränkt möglich ist und darüber hinaus führen derartige Spülzyklen dazu, dass die Spülluft den durch den Brenner zu beheizenden Wärmetauscher kühlt, wobei die dabei abgeführte Wärme im Wesentlichen ungenutzt verloren geht.

Ein Brennersystem, bei dem ein gemeinsamer Brenner sowohl für die Heißlufterzeugung als auch die Dampferzeugung eingesetzt wird, weist hingegen die nachfolgend beschriebenen Nachteile auf. Üblicherweise wird der gemeinsame Brenner, wie zuvor beschrieben, an ein mit einer Verzweigung versehenes Wärmetauschersystem angeschlossen. Die heißen Abgase bzw. Verbrennungsgase werden dann entweder durch das zuvor beschriebene Dreiwegeventil oder durch ein Klappensystem, welches zu meist im Bereich der Wärmetauscher angeordnet ist, gesteuert. Dabei wird das Verbrennungsgas dadurch in den gewünschten Wärmetauscher geleitet, dass der Weg zu dem anderen Wärmetauscher blockiert wird. Ein derartiges Wärmesystem weist jedoch eine beträchtliche Verlustwärmemengenabgabe auf. Insbesondere in dem Fall, in dem der Brenner außerhalb eines Garraums und eines Dampferzeugers angeordnet wird, muss eine aufwändige Isolierung vorgesehen werden. Diese Isolierung ist jedoch zumeist unzureichend, so dass die dennoch abgegebene Wärmemenge einerseits Verlustwärme darstellt und andererseits zur Vermeidung einer Überhitzung des Gargeräts abgeführt werden muss. Um die Erzeugung von Verlustwärme zu vermeiden, kann vorgesehen sein, dass der gemeinsame Brenner bzw. der Kombinationsbrenner im Garraum selber oder im Bereich eines Dampferzeugers angeordnet wird, so dass die Wärmeabgabe des Brenners teilweise genutzt werden kann. Dies führt jedoch zu dem Effekt, dass in verschiedenen Betriebssituationen weiterhin eine unerwünschte Wärmeabgabe erfolgt. In dem Fall, in dem der Brenner in dem Garraum angeordnet wird, führt die von dem Brenner abgegebene Wärmemenge dazu, dass in einem Dampfbetrieb eine unerwünschte Wärmeabgabe in dem Garraum erfolgt, so dass es zu einer Austrocknung eines Garguts kommen kann, und bei Anordnung des Brenners in einem Dampfgenerator in einem Heißluftbetrieb des Gargeräts, also einem Garen bei trockener Hitze, unerwünscht eine Dampferzeugung erfolgt. Daher ist auch in dem Fall, in dem der gemeinsame Brenner im Garraum oder in dem Dampferzeuger angeordnet wird, eine umfangreiche Isolierung des Brenners zur Vermeidung der Abgabe von unerwünschte Abwärme notwendig.

Weiterhin offenbart die DE 2 211 297 einen Brenner für gasförmige Brennstoffe, der in der metallurgischen Industrie für unterschiedliche Beheizungszwecke eingesetzt wird. Bei diesem Brenner ist vorgesehen, dass der gasförmige Brennstoff über eine Zufuhrleitung einem Wandelement zugeleitet wird, durch das Brennstoff passiert, um nach dem Durchströmen entzündet zu werden, wobei das Wandelement aus einem porösen Material besteht, welches Durchströmkanäle für den Brennstoff darbietet. Einen ähnlichen Aufbau weist die in der DE 10 2007 016 018 A1 offenbarte Brenneranordnung, die ebenfalls in der metallurgischen Industrie zur Beheizung und Warmhaltung von Elementen einer Stranggießanlage eingesetzt wird, auf.

In der chemischen Industrie werden darüber hinaus Gasbrenner zur Durchführung chemischer Reaktionen, insbesondere zur Verbrennung von Stickstoffverbindungen eingesetzt. Ein derartiger Brenner ist beispielsweise aus der EP 0 694 735 A1 bekannt. Dabei wird vorgeschlagen, dass ein Gasstrom, der zumindest eine Stickstoffverbindung umfasst, mit einem Verbrennungsgas angereichert und in eine Verbrennungszone eingebracht wird. Die Verbrennungszone ist lateral, von porösem Material umgeben, um einen Verbrennungseffekt an einem Ausgang herbeizuführen.

Weiterhin offenbart die US 6,623,267 B1 einen industriellen Brenner. Der Brenner weist einen Anschlussstutzen auf, mit einem Brennstoffeingang und einer longitudinalen Achse. Eine Vielzahl von länglichen Brennern ist radial um die longitudinale Achse verteilt und die Brenner weisen Brennstoffzuflüsse, die in Verbindung mit dem Anschlussstutzen stehen, auf. Dabei weisen die länglichen Brenner ein äußeres Mischrohr und ein inneres Mischrohr, welches koaxial innerhalb des äußeren Mischrohres angeordnet ist, auf, um einen ringförmigen Zwischenraum bereitzustellen, mit der Brennstoffzufuhr verbunden ist.

Ein weiter Brenner ist aus der US 5,749,720, die eine Gaswärmeeinrichtung mit einem Dualbrenner offenbart, bekannt. Dem Gasbrenner wird über Zufuhrleitungen ein Gasgemisch zugeführt. Ein in eine longitudinale Richtung eines Rohres gerichteter Fluss von Verbrennungsgasen wird über einen Flachbrenner, der innerhalb des Rohres angeordnet ist, und gleichzeitig über einen radialen Innenbrenner, der durch Außenwände des Rohres gebildet wird, erzeugt.

Ferner offenbart die DE 199 21 420 A1 einen Primärreformer zum Einsatz bei der Methanol- oder Ammoniakgewinnung. Es wird vorgeschlagen, dass einem porösem Brennrohr von außen Luft zugeführt wird, welche auf der Innenseite des Rohres zur Ausbildung einer flammenlosen Brennzone mit einem Brenngas vermischt wird.

Aus der DE 2 134 749 ist ein Tunnelbrenner zur Verwendung bei Heizvorrichtungen bekannt, der mit einem Stabilisator aus einem porösen Werkstoff versehen ist. Dieser Brenner arbeitet während des Betriebs mit einer Selbstkühlungswirkung, da die Wärme, die bestrebt ist, den porösen Körper von innen nach außen zu durchdringen, auf einen eintretenden kalten Gasstrom trifft, der hierbei vorgewärmt wird. Genauer gesagt ist in einem zylindrischen Gehäuse ein zylindrischer hohler Kern aus porösem Werkstoff angeordnet, wobei der Kern nahe seinem offenen Ende mit dem Gehäuse verbunden ist und ein zentraler, auf der Achse des Brenners liegender Einlass an dem Gehäuse an demjenigen Ende vorgesehen ist, welches dem geschlossenen Ende des hohlen Kerns benachbart ist. Über einen zentral angeordneten Einlass für ein Gasgemisch wird eine gleichmäßige Verteilung des Gasstroms über alle Teile eines symmetrischen, ringförmigen Gasverteilungsraumes zwischen dem Gehäuse und dem Kern sichergestellt.

Die EP 1 431 658 A1 offenbart ein weiteres Nahrungsmittelbehandlungsgerät. Insbesondere ist dieses Dokument auf einen kompakten Gasbrenner mit innerer Flamme gerichtet. Dabei wird der Gasbrenner in Kochfeldern von Gargeräten eingesetzt. Um eine Erwärmung eines Topfes bzw. einer Pfanne zu erreichen, die auf dem Brenner abgestellt wird, weist der Brenner einen Deckel und einen Tiegel auf. Innerhalb des Tiegels ist eine ringförmige Kammer ausgebildet, in die eine Leitung mündet. Innerhalb der Leitung ist eine Einspritzdüse für ein Brenngas angeordnet, um dem ringförmigen Hohlraum durch die Leitung ein brennbares Gasluftgemisch zuzuführen. Auf der Innenseite des ringförmigen Hohlraums ist eine Vielzahl von Mündungen vorgesehen, durch die das Brenngasluftgemisch in einen Innenbereich des Ringes eintritt, um dort entzündet zu werden. Eine Verwendung eines derartigen Brenners in einem Standgargerät, insbesondere einen Garofen wie einem Kombidämpfer, mittels dem die Garung eines Lebensmittels sowohl mittels Heißluft als auch Dampf ermöglicht wird, ist diesem Dokument nicht zu entnehmen.

Der vorliegenden Erfindung liegt daher die Aufgabe zugrunde, das gattungsgemäße Nahrungsmittelbehandlungsgerät derart weiterzuentwickeln, dass die Nachteile des Stands der Technik überwunden werden. Insbesondere soll ein Nahrungsmittelbehandlungsgerät bereitgestellt werden, welches einen kostengünstigen und kompakten Aufbau ermöglicht und gleichzeitig die Generierung von nicht nutzbarer Verlustwärme reduziert.

Diese Aufgabe wird erfindungsgemäß dadurch gelöst, dass das Nahrungsmittelbehandlungsgerät die Merkmale des kennzeichnenden Teils des Patentanspruchs 1 aufweist.

Die Unteransprüche 2 bis 15 betreffen vorteilhafte Weiterentwicklungen des Nahrungsmittelbehandlungsgeräts gemäß der Erfindung.

Der Erfindung liegt die überraschende Erkenntnis zugrunde, dass eine unerwünschte Wärmeabgabe eines Brenners innerhalb eines Nahrungsmittelbehandlungsgeräts dadurch vermieden werden kann, dass ein nach innen brennender Brenner, insbesondere Poren- bzw. Geflechtbrenner, verwendet wird, wobei ein besonders kompakter und kostengünstiger Aufbau dadurch erreicht werden kann, dass der Brenner sowohl zur Dampferzeugung als auch zur Erzeugung von Heißluft verwendet wird. Bei dem Brenner des erfindungsgemäßen Nahrungsmittelbehandlungsgeräts wird ein brennbares Gasgemisch bzw. Brennfluid im Wesentlichen allseitig von außen durch ein, insbesondere zylindermantelförmiges, poröses Material in einen im Zentrum des Brenners bzw. des porösen Materials gelegenen Brennraum geleitet und in dem porösen Material und/oder in dem Brennraum entzündet. Dadurch, dass das Brennfluid allseitig in den Brennraum fließt, wobei die Verbrennungsgase durch eine Austrittsöffnung aus dem Brennraum abfließen, wird vermieden, dass die Verbrennungsgase wieder in das poröse Material eintreten können, insbesondere an einer einer Eintrittstelle des Brennfluids in dem Brennraum gegenüberliegenden Seite des porösen Materials, und so zu einer Erwärmung des Brenners selber führen können. Aufgrund des durch das poröse Material eingeleiteten Brennfluids wird das poröse Material als auch eine Außenwand des Brenners von dem zugeführten brennbaren Gasgemisch gekühlt, so dass eine Wärmeabgabe aus dem Brenner durch das poröse Material bzw. eine Außen-wand des Brenners weitestgehend vermieden wird. Dabei ist insbesondere vorgesehen, dass das poröse Material in Form einer Innenwandung, die insbesondere zylindermantelförmig aufgebaut ist, gebildet wird, so dass der Brennraum im Inneren des Zylindermantels gebildet wird, während die Verbrennungsgase durch die offenen Grundflächen des Zylinders aus dem Brennraum abfließen können. Insbesondere wird die Innenwandung konzentrisch von einer Außenwandung umgeben, so dass das Brennfluid zunächst einen zweiten Hohlraum, der ebenfalls insbesondere zylindermantelförmig aufgebaut sein kann, zugeführt wird, um nach Durchlaufen des zweiten Hohlraums durch die Innenwandung in den Brennraum zu treten, um dort entzündet zu werden. Es kann insbesondere vorgesehen sein, dass im Zentrum des Brennraums Leitelemente vorgesehen sind, die die Verbrennungsgase aus dem Brennraum in die Austrittsöffnungen leiten. Diese Leitelemente, die insbesondere in Form eines Blechs oder Rohrs ausgebildet sein können, können ferner die Funktion einer Abschirmvorrichtung erfüllen, um eine direkte Beaufschlagung einer einer Einrittsseite des Brennfluids gegenüberliegenden Seite des porösen Materials bzw. der Innenwandung mit Flammen zu verhindern, falls der Brenner ungleichmäßig brennt. Dieses ungleichmäßige Verbrennen kann insbesondere durch Ungleichmäßigkeiten in dem porösen Material und/oder durch Verschmutzungen oder ungleichmäßige Gaszuführung bzw. Brennfluidzuführung verursacht sein.

In dem Fall, in dem der Brenner und der Brennraum im Wesentlichen zylinderförmig aufgebaut sind, sind bereits zwei Ausgänge für die heißen Verbrennungsgase vorhanden, an die jeweils ein Wärmetauscher, insbesondere zur Erzeugung von Heißluft und zur Erzeugung von Dampf, angeschlossen werden kann. Dieser Aufbau des Brenners macht eine Verzweigung in einer Verbrennungsgasführung außerhalb des Brenners überflüssig, so dass Wärmeverluste im Bereich einer derartigen Verzweigung durch den erfindungsgemäßen Aufbau des Nahrungsmittelbehandlungsgeräts vermieden werden. Es wurde insbesondere festgestellt, dass in dem aus dem Stand der Technik bekannten Systemen ein Großteil der unerwünschten Wärmeabgabe durch den Brenner selbst erfolgt. Der erfindungsgemäße Aufbau des in dem Nahrungsmittelbehandlungsgerät verwendeten Brenners ermöglicht es, diese unerwünschte Wärmeabgabe, ohne das zusätzliche Isolierungen des Brenners notwendig sind, zu vermeiden. Dies ermöglicht es, dass es nicht zu einer unerwünschten Heißlufterzeugung bzw. Dampferzeugung bei einem Betrieb des Brenners kommt, insbesondere wenn dieser im Bereich eines Garraums oder eines Dampferzeugers angeordnet ist.

Somit führt das erfindungsgemäße Nahrungsmittelbehandlungsgerät dazu, dass im Gegensatz zu einem Nahrungsmittelbehandlungsgerät mit einem gemeinsamen Brenner zur Erzeugung von Heißluft und Dampf, wie es aus dem Stand der Technik bekannt ist, das also insbesondere einen Brenner aufweist, der nicht in einen Brennraum im Wesentlichen allseitig nach Innen brennt, der Brenner an beliebiger Stelle angeordnet werden kann, da durch den konstruktiven Aufbau des Brenners eine unerwünschte Wärmeabgabe durch den Brenner erzeugte Verlustwärme vermieden wird. Im Gegensatz zu einem Nahrungsmittelbehandlungsgerät mit einem Brennersystem, welches zwei getrennte Brenner für eine Heißlufterzeugung und Dampferzeugung vorsieht, besteht der Vorteil der Kostenreduzierung und des Reduzierung des Platzbedarfs, wobei insbesondere ohne eine Verzögerung zwischen den zwei Betriebsarten Heißluft und Dampf umgeschaltet werden kann, ohne dass aus Sicherheitsgründen vorgeschriebene Vor- und/oder Nachspülschritte ausgeführt werden müssen. Eine Umschaltung des Brenners erfolgt dadurch, dass zwei Austrittsöffnungen vorgesehen sind, eine der Austrittsöffnungen wird verschlossen und aufgrund des sich in dem Brennraum aufbauenden Druckgefälles fließen die Verbrennungsgase automatisch in Richtung der geöffneten Austrittsöffnung, ohne das es zu einem wesentlichen Wärmeübertrag an dem Verschluss der ersten Austrittsöffnung kommt.

Eine besonders bevorzugte Ausführungsform des erfindungsgemäßen Nahrungsmittelbehandlungsgeräts sieht zur Reduzierung der bei einer Weiterleitung der Verbrennungsgase von dem Brenner an entsprechende Wärmetauscher auftretenden unerwünschten Wärmeabgabe folgende Maßnahmen vor:
Im Allgemeinen kann der Brenner nicht in dem zu beheizenden Medium, sei es beispielsweise eine Garraumatmosphäre selbst oder ein Fluid in einem Dampfkessel, angeordnet werden. Daher ist es notwendig, dass die heißen Verbrennungsgase bzw. der heiße Abgasstrom zu entsprechenden Wärmetauschern mittels Abführleitungen geleitet wird, wobei jedoch eine Wärmeabgabe in diesem Überleitungsbereich unerwünscht ist. Aufgrund der Tatsache, dass im Wesentlichen keine Wärmeabgabe im Bereich des Brenners selbst stattfindet, weisen die Verbrennungsgase bei einem nach innen brennenden Brenner eine vergleichsweise hohe Temperatur auf. Eine Wärmeabgabe der Verbrennungsgase an die abgasleitende Leitung in der Nähe des Brenners kann jedoch zu einem Wärmerückfluss aufgrund der Wärmeleitung der Leitung führen. Dieser Wärmerückfluss an den Brenner kann zu dem Effekt führen, dass das vorgemischte Brennfluid aufgeheizt wird. In besonders ungünstigen Fällen kann dies dazu führen, dass es zu einer Entzündung des Brennfluids außerhalb des eigentlichen Brennraums bzw. des porösen Materials kommt. Ein erhöhter Wärmerückfluss liegt insbesondere dann vor, wenn die Verbrennungsgase aus konstruktiven Gründen in der Nähe des Brennraums durch die abgasleitende Leitung bzw. Abfuhrleitung umgelenkt werden müssen, da eine erhöhte Wärmeabgabe an die Abführleitung, insbesondere deren Wände, erfolgt. Um dies zu vermeiden, ist in einer besonderen Ausführungsform vorgesehen, dass das abgasleitende Rohr bzw. die Abführleitung thermisch isoliert von dem eigentlichen Brenner ist. Dies wird insbesondere dadurch erreicht, dass das abgasleitende Rohr doppelwandig ist, wobei ein Kontakt zwischen einer Leitungsinnenwand und einer Leitungsaußenwand in einem ausreichenden Abstand von dem Brennraum erfolgt, so dass ein Wärmerückfluss zu dem Brenner ausreichend vermindert wird. Insbesondere ist dazu vorgesehen, dass die Leitungsinnenwand und/oder die Leitungsaußenwand ein Material umfasst bzw. umfassen, welches eine geringe Wärmeleitungsfähigkeit aufweist, beispielsweise einen keramischen Werkstoff umfasst. Die Verwendung eines keramischen Materials bietet den Vorteil, dass eine Befestigung der Leitungsinnenwand an der Leitungsaußenwand durch punktuellen Kontakt erreicht werden kann, ohne dass ein übermäßiger Wärmeübertrag an die Leitungsaußenwand zu erwarten ist. Es kann jedoch auch vorgesehen sein, dass die Leitungsinnenwand bzw. ein Innenrohr im Bereich in der Nähe des Brennraums hinein oder nur einen punktuellen Kontakt mit einem Außenrohr bzw. der Leitungsaußenwand aufweist, welches bzw. welche mechanisch mit dem Brennraum in Wirkverbindung steht. Um weiterhin einen Wärmeübertrag von der Leitungsinnenwand zur Leitungsaußenwand, beispielsweise durch Strahlung oder Konvektion in einem zwischen der Leitungsinnenwand und der Leitungsaußenwand vorhandenen Spalt zu reduzieren, kann vorgesehen sein, dass in dem Spalt ein wärmeisolierendes Material angeordnet wird und/oder an der Oberfläche der Leitungsinnenwand bzw. der Leitungsaußenwand eine zusätzliche Behandlung vorgenommen wird. Diese zusätzliche Behandlung kann in eine Beschichtung der Oberfläche, insbesondere durch Aufbringen eine Folie, bestehen, so dass der Emissionsgrad der Oberfläche für Wärmestrahlung reduziert wird. Dies kann auch durch ein Polieren der Oberfläche erreicht werden. Der Vorteil der Verwendung eines keramischen Materials besteht darin, dass insbesondere eine thermische Überbeanspruchung der Leitungsinnenwand vermeiden kann. Die Verwendung eines doppelwandigen Rohres bzw. einer doppelwandigen Leitung ist insbesondere in einem Bereich der Verbrennungsgasführung vorteilhaft, in denen eine Umlenkung des Verbrennungsgases erfolgt. Besonders in diesem Bereich bietet sich die Verwendung einer doppelwandigen Leitung an, da durch die Umlenkung der Wärmeübertrag der Verbrennungsgase auf eine Wand der Leitung im Bereich der Umlenkung besonders groß ist. Auch kann vorgesehen sein, dass eine Außenwand des Brenners zur Reduzierung der Wärmeabgabe doppelwandig ausgebildet ist.

Weitere Merkmale und Vorteile der Erfindung ergeben sich aus der nachstehenden Beschreibung, in der bevorzugte Ausführungsformen der Erfindung beispielhaft anhand schematischer Zeichnungen im Einzelnen erläutert sind. Dabei zeigt:
- Figur 1: eine perspektivische Aufsicht auf einen in einem erfindungsgemäßen Nahrungsmittelbehandlungsgerät einsetzbaren Brenner;
- Figur 2: eine weitere perspektivische Ansicht auf den Brenner der Figur 1;
- Figur 3: eine perspektivische Ansicht des Brenners der Figuren 1 und 2 in einer Einbau-situation in einem erfindungsgemäßen Nahrungsmittelbehandlungsgerät in Form eines Gargeräts ;
- Figur 4: eine schematische Aufsicht auf den Brenner der Figuren 1 bis 3;
- Figur 5a: eine schematische Seitenansicht des Brenners der Figur 4;
- Figur 5b: eine schematische Seitenansicht des Brenners der Figur 4 aus Richtung A der Figur 5a;
- Figur 5c: eine schematische Seitenansicht des Brenners der Figur 4 aus Richtung B der Figur 5a;
- Figur 5d: eine schematische Seitenansicht des Brenners der Figur 4 aus Richtung C in Figur 5a;
- Figur 6: eine Explosionsdarstellung des Brenners der Figur 4;
- Figur 7: eine schematische Schnittansicht einer ersten Ausführungsform einer in einem erfindungsgemäßen Nahrungsmittelbehandlungsgerät einsetzbaren Abführleitung; und
- Figur 8: eine schematische Schnittansicht einer zweiten Ausführungsform einer in einem erfindungsgemäßen Nahrungsmittelbehandlungsgerät ein setzbaren Abführleitung.

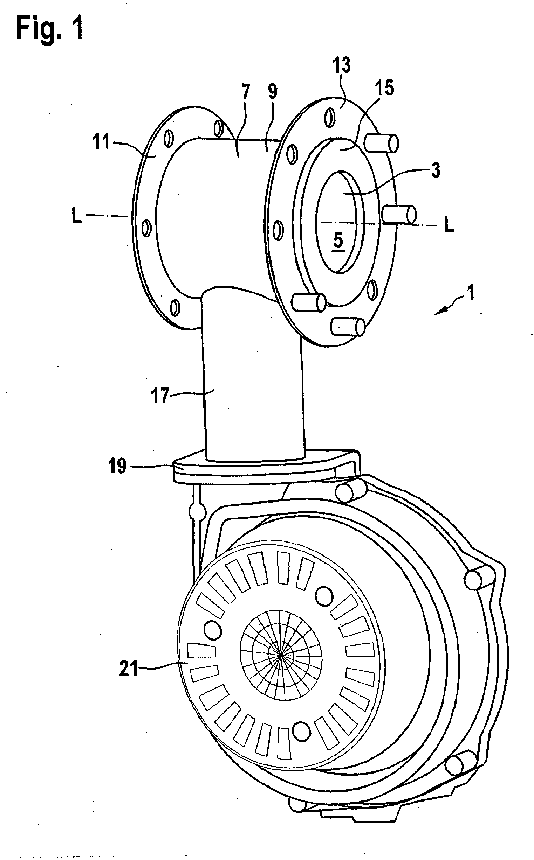

In Figur 1 ist eine perspektivische Ansicht eines in einem erfindungsgemäßen Nahrungsmittelbehandlungsgerät, insbesondere einem Kombidämpfer, einsetzbaren Brenners 1 dargestellt. Der Brenner 1 umfasst einen ersten Hohlraum in Form eines Brennraum 3, der von einer zylindermantelförmigen Innenwandung 5 umgeben ist, so dass der Brennraum 3 eine im Wesentlichen zylinderförmige Form aufweist. Dabei ist in Figur 1 eine Längsachse des Brennraums 3 mit L bezeichnet. Wie aus Figur 1 ersichtlich, umgibt die Innenwandung 5 den Brennraum 3 in einer Ebene, die senkrecht zu der Längsachse L ist, umlaufend. Die Innenwandung 5 umfasst ein poröses Material, insbesondere einen Gestrickkörper. Aufgrund der Porosität der Innenwandung 5 kann ein Brcnnfluid aus einem zweiten Hohlraum in Form eines Zuführraums 7 zugeführt werden. Die Innenwandung 5 kann in einer nicht dargestellten Ausführungsform auch als Metallblech mit einer Vielzahl von Durchgangsöffnungen ausgebildet sein, insbesondere um einen Blechbrenner bereitzustellen. Der Zuführraum 7 umgibt den Brennraum 3 konzentrisch und der Zuführraum 7 weist ebenfalls eine im Wesentlichen zylindermantelförmige Querschnittsform auf. Der Zuführraum 7 wird zur Innenseite hin durch die Innenwandung 5 begrenzt, während er auf der Außenseite durch eine konzentrisch zu dem Brennraum 3 bzw. der Innenwandung 5 angeordnete Außenwandung 9 radial nach Außen begrenzt wird. Ferner wird der Zuführraum 7 einseitig durch einen ersten Flansch 11 und auf der dem ersten Flansch 11 gegenüberliegenden Seite durch einen an einem zweiten Flansch 13 befestigten Deckel 15 begrenzt. In den Zuführraum 7 mündet eine Zufuhrleitung 17 mittels derer dem Brenner 1 ein Brennfluid zuführbar ist.

Im Gegensatz zu der Innenwandung 5 sind die Außenwandung 9, der Flansch 11, der Deckel 15 als auch die Zufuhrleitung 17 undurchlässig für das Brennfluid. Bei dem in Figur 1 dargestellten Brenner 1 handelt es sich um einen voll vormischenden, gebläseunterstützt arbeitenden Brenner, da dem Brenner 1 , insbesondere der Zufuhrleitung 17, das Brennfluid mittels eines an einem Flansch 19 befestigten Gebläses 21 zugeführt wird.

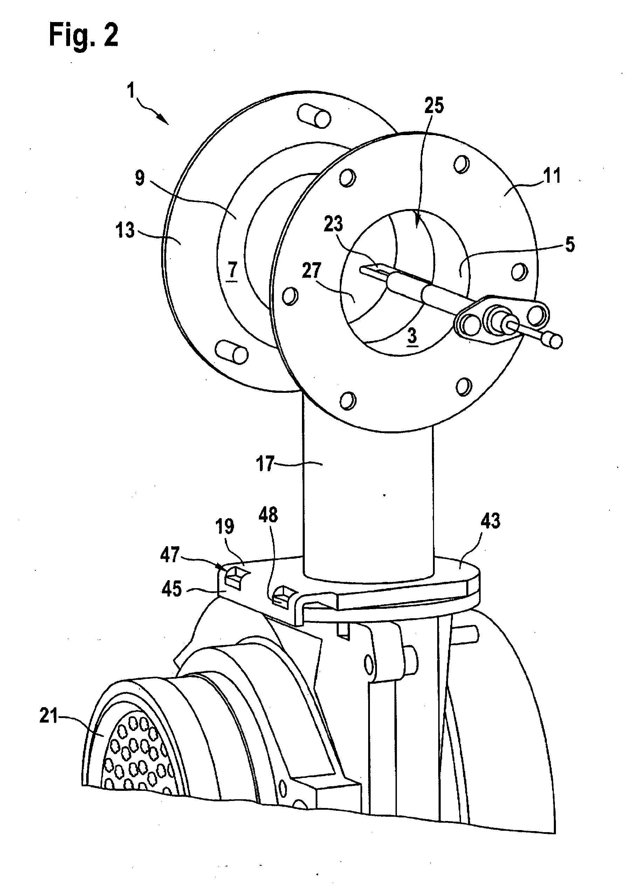

Anhand Figur 2, die eine weitere perspektivische Aufsicht auf den Brenner 1 der Figur 1 dargestellt, wird nun die Funktionsweise des Brenners 1 erläutert. Ein vorgemischtes Brennfluid wird dem Brenner 1 über das Gebläse 21 mittels der Zufuhrleitung 17 zugeführt. Das Brennfluid tritt über die Zufuhrleitung 17 in den Zuführraum 7 ein, wo es über den gesamten Umfang sowie die gesamte Länge des Zuführraums 7 verteilt wird. Hierbei kann insbesondere vorgesehen sein, dass über ein in Figur 2 nicht dargestelltes Vergleichmäßigungselement in Form eines ersten Leitelements das Brennfluid in dem Zuführraum 7 so verteilt wird, das es gleichmäßig verteilt über den Umfang des Brennraums 3 durch die Innenwandung 5 in den Brennraum 3 eintritt. Das in den Brennraum 3 eintretende Brennfluid wird mittels einer Zündvorrichtung in Form einer Zündelektrode 23 gezündet. Die in dem Brennraum 3 entstehenden Verbrennungsgase treten dann beidseitig an den Enden des Brennraums 3 durch Austrittsöffnungen 25 und 27 aus dem Brennraum 3 aus. Da das Brennfluid im Wesentlichen allseitig in den Brennraum 3 eintritt, entsteht eine in das Innere des Brennraums 3 gerichtete Verbrennung, weil aufgrund der allseitigen Einströmung des Brennfluids im Zentrum des Brennraums 3 eine Strömung in Richtung der Austrittsöffnungen 25 und 27 erzeugt wird. Diese Strömung kann durch ein in Figur 2 nicht dargestelltes, zweites Leitelement, welches die Verbrennungsgase bzw. das Brennfluid in Richtung der Austrittsöffnungen 25 und 27 richtet, verstärkt werden. Durch diese zweiten Leitelemente wird auch ein Aufheizen der Innenwandung 5 auf einer gegenüber liegenden Seite des Brennraums 3, wie sie bei einer ungleichmäßigen Verbrennung auftreten kann, vermieden. Diese ungleichmäßige Verbrennung kann dazu führen, dass die Innenwandung 5 sich lokal so stark erwärmt, dass Flammen in die Inncnwandung 5 bzw. den Zuführraum 7 zurückschlagen können. Die Gefahr einer ungleichmäßigen Verbrennung besteht insbesondere bei Ausführung des Brenners 1 als Blechbrenner, wenn die Durchgangsöffnungen im Blech ungleichmäßige Öffnungsquerschnitte aufweisen. Aufgrund der Nachführung weiteren Brennfluids über die Zufuhrleitung 17 in den Zufuhrraum 7 wird eine Oberfläche des Brenners, insbesondere die Außenwandung 9, durch das zugeführte Brennfluid gekühlt, so dass im Wesentlichen keine Verlustwärmeabstrahlung im Bereich des Brenners erfolgt.

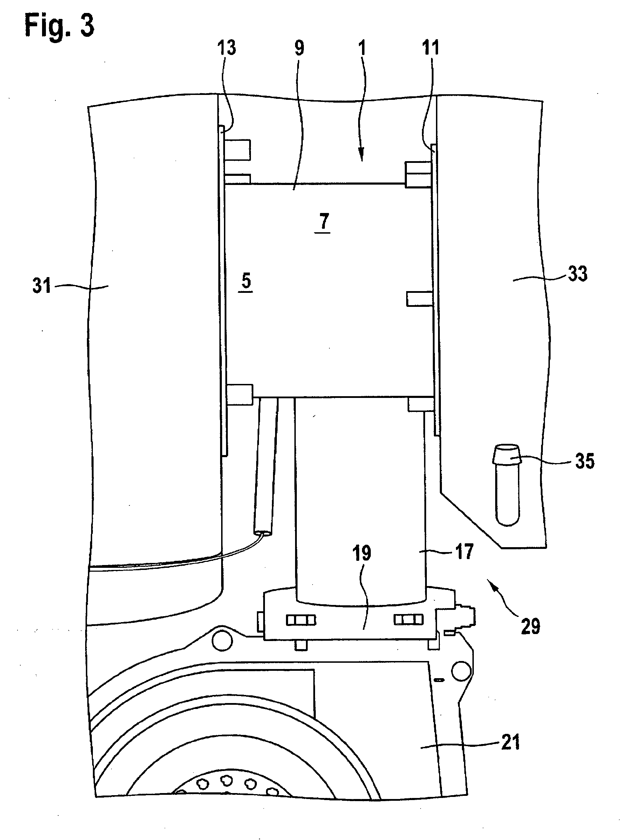

In Figur 3 ist der Brenner der Figuren 1 und 2 in einer Einbausituation in einem erfindungsgemäßen Nahrungsmittelbehandlungsgerät in Form eines Kombidämpfers 29 dargestellt. Der Kombidämpfer 29 umfasst neben dem Brenner 1 ferner einen Behandlungsraum in Form eines Garraums 31 sowie einen Dampferzeuger umfassend einen Dampfkessel 33. Der Brenner 1 ist über den Flansch 11 mit dem Dampfkessel 33 verbunden, während der Brenner 1 über den Flansch 13 mit dem Garraum 31 verbunden ist. Die Austrittsöffnung 27 mündet somit in den Garraum 31, während die Austrittsöffnung 25 in den Dampfkessel 33 mündet. Die aus der Austrittsöffnung 25 austretenden Verbrennungsgase werden in dem Dampfkessel 33 einen nicht dargestellten Wärmetauscher zugeführt, mittels dem ein in dem Dampfkessel 33 vorhandenes Fluid, wie Wasser, erhitzt und somit verdampft wird. Das zu verdampfende Fluid wird dem Dampfkessel 33 über einen Zuführstutzen 35 zugeführt. Die in den Garraum 31 eintretenden Verbrennungsgase werden über ein geeignetes Zirkulationssystem, insbesondere mittels eines Umwälzgebläses, derartig im Garraum 31 zirkuliert, dass ein in dem Garraum 31 vorhandenes Gargut erhitzt wird. Alternativ können die Verbrennungsgase zunächst einem Wärmetauscher zugeführt werden, der eine in dem Garraum 31 vorhandene Garraumatmosphäre erhitzt, die dann über eine Umwälzgebläse in dem Garraum 31 zirkuliert wird. Über eine nicht dargestellte Verbindungsleitung kann dem Garraum 31 ferner in dem Dampfkessel 33 erzeugter Dampf zugeführt werden.

Aufgrund der Konstruktion des Brenners 1 wird sichergestellt, dass sich die Außenwandung des Brenners 1 im Wesentlichen nicht erhitzt und die in dem Brenner 1 erzeugten Verbrennungsgase, ohne eine Erhitzung einer Oberfläche des Brenners hervorzurufen, in den Garraum 31 bzw. den Dampfkessel 33 geführt werden.

Eine Zufuhr der Verbrennungsgase in den Garraum 31 bzw. den Dampfkessel 33 kann über in Figur 3 nicht dargestellte, mit den Austrittsöffnungen 25, 27 in Wirkverbindung stehende Verschlusselemente erreicht werden. Ist beispielsweise lediglich ein Heißluftbetrieb, ohne eine Dampferzeugung, gewünscht, wird die Austrittsöffnung 25 mittels des Verschlusselements verschlossen, wodurch erreicht wird, dass aufgrund des in der Brennraum 3 entstehenden Druckgefälles das Verbrennungsgas ausschließlich durch die Austrittsöffnung 27 in den Garraum 31 tritt.

Um ein Umschalten von einem Heißluft- in einen Dampfbetrieb zu erreichen, wird das Vcrschlusselement zu dem Dampfkessel 33 geöffnet und gleichzeitig das Verschlusselement zu dem Garraum 31 geschlossen, so dass die Verbrennungsgase aus dem Brennraum 3 ausschließlich in den Dampfkessel 33 fließen. Hierbei kann der Brenner 1 kontinuierlich in Betrieb gehalten werden, so dass ein Umschalten von einem Heißluftbetrieb in einen Dampfbetrieb ohne eine zeitliche Verzögerung möglich ist. Alternativ oder ergänzend kann eine Durchströmung eines jeweiligen Wärmetauschers dadurch erreicht werden, dass an einem Einlass bzw. einem Auslass für die von dem Brenner 1 gelieferten Verbrennungsgase, der Wärmetauscher zumindest eine Absperrvorrichtung vorgesehen ist.

So kann eine Absperrvorrichtung in Form zumindest einer in dem Einlass bzw. dem Auslass angeordneten Klappe ausgebildet sein. Ein Verschließen eines Einlasses eines Wärmetauschers verhindert dann, dass dieser Wärmetauscher von Verbrennungsgasen durchströmt wird. Bei einem Verschließen eines Auslasses wird erreicht, dass die Verbrennungsgase zwar in den Wärmetauscher eintreten können, sich aber aufgrund der fehlenden Durchströmung schnell abkühlen. Das sich in diesem Wärmetauscher aufbauende Druckgefälle bewirkt in dem Brenner, dass die Verbrennungsgase den Brenner nicht durch die Austrittsöffnung verlassen, die mit dem Wärmetauscher, dessen Auslass verschlossen ist, fluidal verbunden ist, sondern durch die Austrittsöffnung verlassen, die mit einem Wärmetauscher fluidal verbunden ist, dessen Einlass und Auslass geöffnet sind. Die Anordnung der Absperrvorrichtung an einem Auslass des Wärmetauschers bietet den Vorteil, dass die Verbrennungsgase sich dort weitestgehend abgekühlt haben, so dass eine Anordnung von beweglichen Teilen in diesem Bereich des Wärmetauschers im Wesentlichen unproblematisch ist.

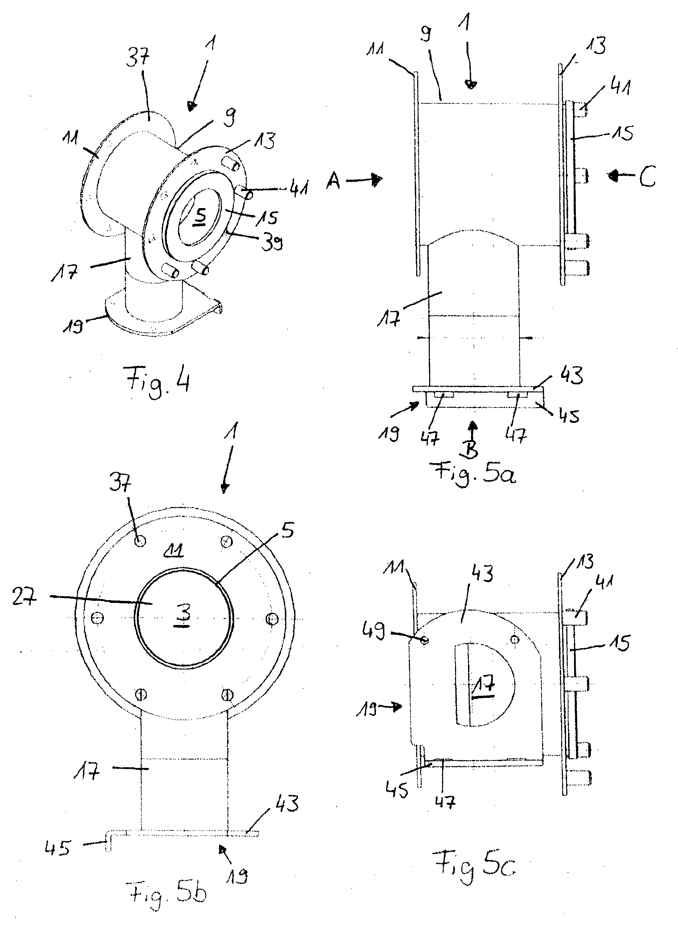

In Figur 4 ist eine schematische, perspektivische Ansicht auf den Brenner 1 der Figuren 1 bis 3 dargestellt. Wie Figur 4 insbesondere zu entnehmen ist, weist der Flansch 11 Befestigungsvorrichtungen in Form von Öffnungen 37 auf. Diese Öffnungen 37 ermöglichen es, dass wahlweise komplementäre Befestigungsvorrichtungen, wie Stifte, aufgenommen werden können und/oder der Brenner 1 mittels durch die Öffnungen 37 verlaufende Befestigungselement, wie Schrauben, mit einer Abführleitung und/oder einem Wärmetauscher verbunden werden kann.

Der Flansch 13 weist Befestigungsvorrichtungen in Form von Öffnungen 39 sowie Stiften 41 auf. Die Stifte 41 ermöglichen es, dass der Brenner 1 relativ zu einer Abführleitung bzw. einem Wärmetauscher ausgerichtet werden kann, indem die Stifte 41 in komplementäre Öffnungen der Abführleitung bzw. des Wärmetauschers aufgenommen werden, während eine Befestigung des Flansches 13 an der Abführleitung bzw. dem Wärmetauscher durch Befestigungselemente, insbesondere in Form von Schrauben, die durch die Öffnungen 39 geführt sind, befestigt wird.

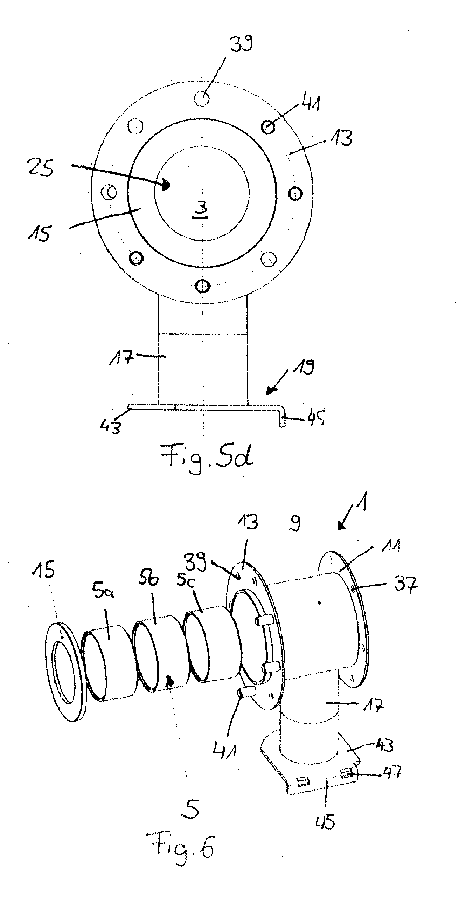

In Figur 5 a ist eine schematische Seitenansicht des Brenners 1 der Figur 4 dargestellt, während in Figur 5b der Brenner 1 der Figur 4 aus Richtung A in Figur 5 a in einer schematischen Seitenansicht dargestellt ist. Wie den Figuren 5a und 5b zu entnehmen ist, weist der Flansch 19 eine Basisfläche 43 auf, an deren einem Ende eine Abbiegung 45 ausgebildet ist. In der Abbiegung 45 sind Öffnungen 47 ausgebildet. Wie insbesondere Figur 2 zu entnehmen, dienen die Öffnungen 47 dazu, an dem Gebläse 21 ausgebildete Befestigungsnasen 48 aufzunehmen. Dies ermöglicht es, dass der Flansch 19 zunächst auf das Gebläse 21 soweit aufgeschoben wird, dass die Befestigungsnasen 48 durch die Öffnungen 47 hindurch treten. Anschließend wird der Flansch 19 mittels Befestigungselementen in Form von Schrauben an dem Gebläse 21 befestigt.

In Figur 5 c ist eine schematische Ansicht des Brenners 1 der Figur 4 aus Richtung B in Figur 5a dargestellt. Wie Figur 5c zu entnehmen ist, sind in der Basisfläche 43 des Flansches 19 Befestigungsvorrichtungen in Form von Öffnungen 49 ausgebildet, die es ermöglichen, den Flansch 19 mittels Befestigungselementen, wie Schrauben, an dem Gebläse 21 zu befestigen.

In Figur 5d ist schließlich eine Ansicht auf den Brenner 1 der Figur 4 aus Richtung C der Figur 5a dargestellt.

In Figur 6 ist eine schematische Explosionsansicht des Brenners 1 der Figur 4 dargestellt. In Figur 6 ist zu erkennen, dass die Innenwandung 5 eine Mehrzahl von formstabilen Formkörpern in Form von Gestrickkörpern 5a, 5b, 5c umfasst. Bei einem Zusammenbau des Brenners 1 werden die Gestrickkörper 5a, 5b, 5c zur Innenwandung 5 kombiniert, in die Außenwandung 9 zur Bildung der Innenwandung 5 eingeführt und mittels des Deckels 15 kraft- bzw. formschlüssig im Inneren des Brenners 1 befestigt. Hierbei ist insbesondere vorgesehen, dass für eine formschlüssige Verbindung an dem Flansch 11 sowie dem Deckel 15 entsprechende Profilformen ausgebildet sind, die zumindest teilweise die Ränder der Gestrickkörper 5 a bzw. 5c aufnehmen. Eine kraftschlüssige Verbindung wird durch den Anpressdruck des Deckel 15 an den Flansch 13 bereitgestellt.

Der Aufbau der Innenwandung 5 durch eine Mehrzahl von Einzelelementen, in Figur 6 beispielsweise drei Gestrickkörper 5a, 5b, 5c, bietet den Vorteil, dass unterschiedliche Brennergeometrien aufgebaut werden können. So kann beispielsweise die Länge des Brennraums 3 durch Verwendung einer verlängerten Außenwandung 9 vergrößert werden, und ohne dass es spezieller Werkzeuge zur Herstellung einer entsprechend langen Innenwandung unter Verwendung des porösen Materials bedarf. Insbesondere kann auf ein Werkzeug zum Pressen unterschiedlich langer Gestrickkörper verzichtet werden, da unterschiedlich lange Innenwandungen dadurch hergestellt werden können, dass eine entsprechende Anzahl von Gestrickkörpern zur Herstellung der Innenwandung miteinander kombiniert werden. Auch ermöglicht es der modulare Aufbau der Innenwandung, dass die Dichte der Gestrickkörper entsprechend variiert werden kann, insbesondere über eine Länge des Brennraums 3 als auch in einer radialen Richtung des Brennraums 3. So ist beispielsweise vorstellbar, dass die Gestrickkörper 5 a und 5c eine geringere Dichte aufweisen, als der Gestrickkörper 5b, um ein gleichmäßiges Eintreten des Brennfluids durch die Innenwandung 5 in den Brennraum 3 hinein zu erreichen. Eine höhere Dichte des Gestrickkörpers 5 bewirkt, dass das Brennfluid auch gleichmäßig durch den Zuführraum 7 zu den Gestrickkörpern 5 a, 5 c fließt, um dort durch die Innenwandung 5 in den Brennraum 3 einzutreten.

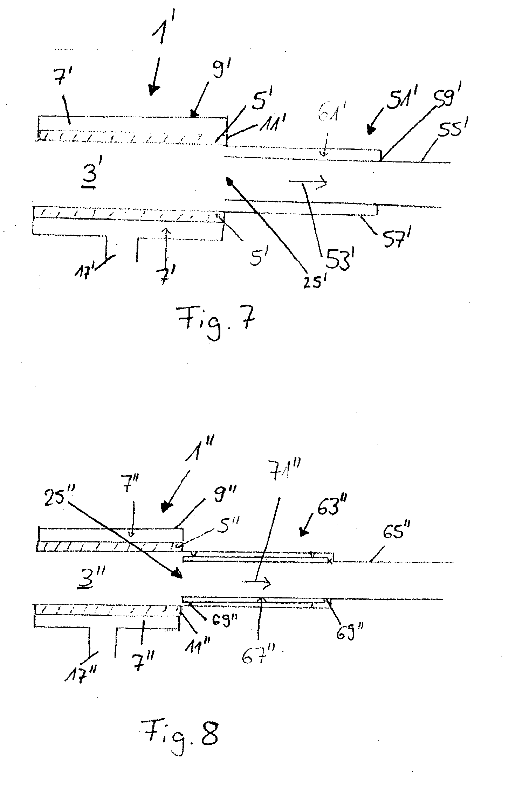

Anhand der Figuren 7 und 8 wird im Folgenden eine besonders bevorzugte Ausführungsform einer mit dem Brenner 1 verbindbaren Abführleitung erläutert. In Figur 7 ist eine schematische Querschnittsansicht eines Brenners 1' dargestellt. Die Elemente des Brenners V, die denjenigen des Brenners 1 entsprechen, tragen die gleichen Bezugszeichen, allerdings einfach gestrichen. Wie Figur 7 zu entnehmen ist, ist über einen Flansch 11' eine Abführleitung 51' mit dem Brenner 1' verbunden. Die Abführleitung 51' ermöglicht es, dass in dem Brennraum 3' entstehende Verbrennungsgase, die eine vergleichsweise hohe Temperatur aufweisen, aus dem Brennraum 3' abgeführt und insbesondere einem Wärmetauscher, der mit der Abführleitung 51' verbunden ist, zugeführt werden. Die Verbrennungsgase fließen insbesondere in Richtung des Pfeils 53' durch die Abführleitung 51'. Wie Figur 7 weiter zu entnehmen ist, ist die Abführleitung 51' als doppelwandiges Rohr ausgebildet. Die Abführleitung 51' umfasst eine Innenwandung in Form eines Innenrohrs 55' sowie bereichsweise eine Außenwandung in Form eines Außenrohrs 57' . Das Außenrohr 57' ist über den Flansch 11' mit dem Brenner 1' verbunden und das Innenrohr 55' ist beabstandet von dem Flansch 11' bzw. dem Brenner 1' an einer Kontaktstelle 59' in Kontakt mit dem Außenrohr 57'. Die beabstandete Kontaktierung des Innenrohrs 55' mit dem Außenrohr 57' führt dazu, dass ein Wärmerückfluss an den Brenner 1' hinreichend verringert wird. Dadurch wird insbesondere verhindert, dass sich die Außenwandung 9' des Brenners 1' aufheizen kann und so ein Aufheizen des vorgemischten Brenngases verhindert werden kann. Um einen Wärmeübertrag in einem Spalt 61' zwischen dem Innenrohr 55' und dem Außerohr 57', insbesondere durch Strahlung oder Konvektion, zu vermeiden, sind die sich zugewandten Seiten des Innenrohrs 55' bzw. des Außenrohrs 57' zusätzlich behandelt, um den Emissionsgrad bzw. den Reflektionsgrad für Wärmestrahlung zu verringern. Dabei kann insbesondere vorgesehen sein, dass entsprechende Beschichtungen auf die Oberflächen aufgebracht sind oder die Oberflächen durch Polieren so behandelt sind, dass eine maximale Reflektion von Wärmestrahlung in dem Außenrohr 57' bzw. eine minimale Emission von Wärmestrahlung an dem Innenrohr 55' im Bereich des Spalts 61' erfolgt.

In Figur 8 ist eine alternative Ausführungsform eines Brenners 1" in einer schematischen Querschnittsansicht dargestellt. Die Elemente, die denjenigen des Brenners 1 ' entsprechen, tragen die gleichen Bezugszeichen, allerdings zweifach gestrichen. Im Gegensatz zu dem in Figur 7 dargestellten Brenner 1' ist der Brenner 1" im Bereich eines Flansches 11" mit einer Abführleitung 63" verbunden. Die Abführleitung 63" ist zumindest bereichsweise doppelwandig ausgeführt. Eine Außenwandung in Form eines Außenrohrs 65" ist über den Flansch 11" mit dem Brenner 1" verbunden. In einem Bereich der Abführleitung 63" nahe dem Brenner 1' bzw. dem Flansch 11" ist innerhalb des Außenrohrs 65" eine Innenwandung in Form eines Innenrohrs 67" angeordnet. Das Innenrohr 67" umfasst zumindest teilweise ein keramisches Material. Das Inncnrohr 67" ist an Kontaktstellen 69" mit dem Außenrohr 65" verbunden. Diese Kontaktstellen 69" sind insbesondere thermisch isolierend. Vorzugsweise umfasst das Außenrohr 65" ferner ein Material mit einer geringen thermischen Leitfähigkeit. Dadurch wird erreicht, dass entlang des Pfeils 71" durch die Abführleitung 63" fließende Verbrennungsgase zwar im gewissen Rahmen eine Erwärmung des Außenrohrs 65" bewirken, jedoch eine thermische Rückkopplung zu dem Brenner 1" vermieden wird.

In besonders bevorzugten Ausführungsformen ist ein Innendurchmesser des Innenrohrs 55' bzw. 67" so gewählt, dass er gleich oder größer einem Innendurchmesser des Brennraums 3' bzw. 3" ist.

Weiterhin wird mit der Erfindung in nicht dargestellten Ausführungsformen vorgeschlagen, dass zumindest eine Abführleitung und/oder zumindest ein Wärmetauscher so ausgebildet ist bzw. sind, dass ein Strömungsweg der Verbrennungsgase zumindest bereichsweise, insbesondere vor Eintritt in eine Wärmetauscherzone, abwärts, d.h., je nach Festlegung der Richtung der Gravitationskraft, entgegen einer Gravitationskraft oder in Richtung der Gravitationskraft, gerichtet ist. So kann verhindert werden, dass eine natürliche Konvektion auftreten kann, wie es der Fall wäre, wenn die Verbrennungsgase direkt aufwärts, d.h.. in Richtung einer Gravitationskraft bzw. entgegen dieser, mittels der Abführleitung oder dem Wärmetauscher geführt würden. Diese Konvektion würde bewirken, dass unerwünschte Wärme in einen Wärmetauscher, der nicht erwärmt werden soll, bei dem beispielsweise die Absperrvorrichtung an einem Auslass verschlossen ist, gelangen könnte. Werden die Verbrennungsgase jedoch bereichsweise abwärts geführt, bildet sich ein Siphon, der diese Konvektion unterdrückt. Vorzugsweise erfahren die Verbrennungsgase nach einer Abwärtsleitung eine Richtungsumkehr, vorzugsweise um 180°, werden also anschließend in eine Aufwärtsrichtung geleitet.

Die Ausbildung eines derartigen Siphons bzw. die Ausrichtung eines Strömungsweges von Verbrennungsgasen derart, dass die Verbrennungsgase zunächst abwärts geführt werden, kann auch unabhängig von dem zuvor beschriebenen Aufbau eines Brenners realisiert sein, insbesondere in einem Nahrungsmittelbehandlungsgerät bzw. Gargerät, welches einen abweichend aufgebauten Brenner zur Erzeugung der Verbrennungsgase aufweist.

Die in der vorstehenden Beschreibung, in den Zeichnungen sowie in den Ansprüchen offenbarten Merkmale der Erfindung können sowohl einzeln auch als auch in jeder beliebigen Kombination für die Verwirklichung der Erfindung, die an verschiedenen Ausführungsformen wesentlich sein.

## Patentansprüche

1. Nahrungsmittelbehandlungsgerät, insbesondere Gargerät (29) zur Beaufschlagung zumindest eines Garguts mit Heißluft und/oder Dampf, mit zumindest einem Brenner (1, 1', 1") zur Verbrennung eines Brennfluids unter Erzeugung von Verbrennungsgasen, wobei der Brenner (1, 1', 1") zumindest einen ersten Hohlraum (3,3',3") umfasst, sowie zumindest eine erste mit dem ersten Hohlraum (3, 3', 3") in fluidaler Verbindung stehende Austrittsöffnung (25, 25', 25") und zumindest eine zweite mit dem ersten Hohlraum (3, 3', 3 ") in fluidaler Verbindung stehende Austrittsöffnung (27) und zumindest ein mit der ersten Austrittsöffnung (25, 25', 25") in Wirkverbindung stehender erster Wärmetauscher und zumindest ein mit zumindest der zweiten Austrittsöffnung (27) in Wirkverbindung stehender zweiter Wärmetauscher vorgesehen sind, **dadurch gekennzeichnet, dass**
der Brenner (1, 1 ', 1") eine Innenwandung (5, 5', 5") umfasst, wobei die Innenwandung (5, 5', 5") zumindest den ersten Hohlraum (3, 3', 3") in zumindest einer Ebene zumindest bereichsweise umlaufend umgibt, das Brennfluid und/oder die Verbrennungsgase dem ersten Hohlraum (3, 3', 3") durch die Innenwandung (5, 5', 5") hindurch zuführbar ist bzw. sind, und die erste Austrittsöffnung (25, 25', 25") und die zweite Austrittsöffnung (27) auf im Wesentlichen sich gegenüberliegenden Seiten des ersten Hohlraums (3, 3', 3") angeordnet sind.

2. Nahrungsmittelbehandlungsgerät nach Anspruch 1, **dadurch gekennzeichnet, dass** das Brennfluid innerhalb des ersten Hohlraumes (3, 3', 3") und/oder innerhalb der Innenwandung (5, 5', 5"), insbesondere zur Erzeugung der Verbrennungsgase, verbrennbar ist, insbesondere die Innenwandung (5, 5', 5") zumindest ein für das Brennfluid und/oder die Verbrennungsgase durchlässiges erstes, insbesondere zumindest ein Keramikmaterial umfassendes, Material umfasst, insbesondere die Innenwandung (5, 5', 5") zumindest ein Gestrickmaterial, zumindest ein poröses Material, zumindest eine poröse Matrix, zumindest ein Blech, insbesondere umfassend zumindest ein Metall und/oder eine Vielzahl von Durchgangsöffnungen, und/oder zumindest ein Geflechtmaterial umfasst, wobei vorzugsweise die Dichte des ersten Materials und/oder die Durchlässigkeit des ersten Materials für das Brennfluid und/oder die Verbrennungsgase im Wesentlichen konstant ist oder die Dichte des ersten Materials zu dem ersten Hohlraum (3, 3', 3") hin zumindest bereichsweise zunimmt und/oder die Durchlässigkeit des ersten Materials für das Brennfluid und/oder die Verbrennungsgase zu dem ersten Hohlraum (3, 3', 3") hin zumindest bereichsweise abnimmt.

3. Nahrungsmittelbehandlungsgerät nach Anspruch 1 oder 2, **dadurch gekennzeichnet dass**,
die Verbrennungsgase über die erste Austrittsöffnung (25, 25', 25") und die zweite Austrittsöffnung (27) aus dem ersten Hohlraum (3, 3', 3") ausleitbar sind, die erste Austrittsöffnung (25, 25', 25") und/oder die zweite Austrittsöffnung (27) durch zumindest eine in der ersten Innenwandung ausgebildete Öffnung und/oder durch einen von der Innenwandung (5, 5', 5") nicht umgebenen Bereich des ersten Hohlraums (3, 3', 3") gebildet ist bzw. sind, und/oder die erste Austrittsöffnung (25, 25', 25") und/oder die zweite Austrittsöffnung (27) mit zumindest einer ersten Abführleitung (51', 63") und/oder die zweite Austrittsöffnung (27) mit zumindest einer zweiten Abführleitung in fluidaler Verbindung steht bzw. stehen.

4. Nahrungsmittelbehandlungsgerät nach einem der vorangehenden Ansprüche, **dadurch gekennzeichnet, dass**
die erste Abführleitung (51', 63") mit dem ersten Wärmetauscher und/oder die zweite Abführleitung, mit dem zweiten Wärmetauscher in Wirkverbindung, insbesondere in fluidaler Verbindung steht bzw. stehen und/oder
der erste Wärmetauscher und/oder der zweite Wärmetauscher zumindest einen Einlass und/oder zumindest einen Auslass, insbesondere für dem Wärmetauscher von dem Brenner (1,1', 1") zugeführte Verbrennungsgase umfasst bzw. umfassen, wobei vorzugsweise die Größe eines Öffnungsquerschnitts des Einlasses und/oder des Auslasses mittels zumindest einer Absperrvorrichtung, insbesondere umfassend zumindest eine Klappe, veränderbar ist, insbesondere der Einlass und/oder der Auslass, vorzugsweise vollständig, verschließbar ist.

5. Nahrungsmittelbehandlungsgerät nach einem der vorangehenden Ansprüche, **dadurch gekennzeichnet, dass**
mittels des ersten Wärmetauschers Heißluft innerhalb zumindest eines Behandlungsraums (31) des Nahrungsmittelbehandlungsgeräts (29) erzeugbar ist und/oder mittels des zweiten Wärmetauschers Dampf, vorzugsweise innerhalb des Behandlungsraums (31), erzeugbar ist, insbesondere der zweite Wärmetauscher zumindest bereichsweise von zumindest einem Dampferzeuger (33) umfasst ist.

6. Nahrungsmittelbehandlungsgerät nach einem der vorangehenden Ansprüche, **gekennzeichnet durch**
zumindest eine die Innenwandung (5, 5', 5") und/oder den ersten Hohlraum (3, 3', 3") unter Bildung zumindest eines zweiten Hohlraums (7, 7', 7") zumindest bereichsweise umgebende Außenwandung (9, 9', 9"), wobei insbesondere der erste Hohlraum (3, 3', 3") und der zweite Hohlraum (7, 7', 7") **durch** die Innenwandung (5, 5', 5") voneinander getrennt sind und/oder
die Außenwandung (9, 9', 9") im Wesentlichen undurchlässig für das Brennfluid und/oder die Verbrennungsgase ist und/oder der zweite Hohlraum (7, 7', 7") im Wesentlichen geschlossen ist, insbesondere im Wesentlichen allseitig von der Innenwandung (5, 5', 5") und/oder der Außenwandung (9, 9', 9") begrenzt ist.

7. Nahrungsmittelbehandlungsgerät nach einem der vorangehenden Ansprüche, **dadurch gekennzeichnet, dass**
das Brennfluid mittels zumindest einer Zufuhrleitung (17, 17', 17") der Innenwandung (5, 5', 5") zuführbar ist, wobei vorzugsweise die Zufuhrleitung (17, 17', 17") in fluidaler Verbindung mit dem zweiten Hohlraum (7, 7', 7") steht, insbesondere die Zufuhrleitung (17, 17', 17") in den zweiten Hohlraum (7, 7', 7") mündet und/oder von der Außenwandung (9, 9', 9") umfasst ist,
das Brennfluid dem Brenner (1, 1', 1") zumindest teilweise, insbesondere vollvorgemischt, gebläseunterstützt zuführbar ist, insbesondere das Brennfluid zumindest eine Brennfluidkomponente umfasst und die Brennfluidkomponente dem Brenner (1, 1', 1") mittels zumindest eines, insbesondere mit der Zufuhrleitung (17, 17', 17") in fluidaler Verbindung stehenden Gebläses (21), zuführbar ist, wobei vorzugsweise die Brennfluidkomponente zumindest ein Brenngas, wie Methan, Ethan, Propan, Butan, Umgebungsluft, Sauerstoff und/oder Wasserstoff, und/oder zumindest eine liquide Brennflüssigkeit, insbesondere in Aerosolform, umfasst, und/oder
die Innenwandung (5, 5', 5") zumindest bereichsweise zylindermantelförmig, topfförmig und/oder kubusmantelförmig ausgebildet ist und/oder der erste Hohlraum (3, 3', 3 ") im Wesentlichen zylinderförmig und/oder kubusförmig ausgeformt ist, wobei die Innenwandung (5, 5', 5") und/oder der erste Hohlraum (3, 3', 3") zumindest bereichsweise eine quadratische, kreisförmige, elliptische und/oder rechteckförmige Querschnittsform aufweist bzw. aufweisen.

8. Nahrungsmittelbehandlungsgerät nach einem der vorangehenden Ansprüche, **dadurch gekennzeichnet, dass**
die Außenwandung (9, 9', 9") und/oder der zweite Hohlraum (7, 7', 7") die Innenwandung (5, 5', 5") und/oder den ersten Hohlraum (3, 3', 3") zumindest bereichsweise im Wesentlichen konzentrisch umgibt und/oder der zweite Hohlraum (7, 7', 7") zumindest bereichsweise eine im Wesentlichen zylindermantelförmige und/oder kubusmantelförmige Querschnittsform aufweist, und/oder
der zweite Hohlraum (7, 7', 7") zumindest ein Vergleichmässigungselement umfasst, wobei mittels des Vergleichmässigungselementes das Brennfluid im Wesentlichen gleichmässig über die Innenwandung (5, 5', 5") verteilt in die Innenwandung (5, 5', 5") und/oder den ersten Hohlraum (3, 3', 3"), insbesondere allseitig, leitbar ist, wobei das Vergleichmässigungselement zumindest einen Abstand zwischen der Außenwandung (9, 9', 9") und der Innenwandung (5, 5', 5"), insbesondere eine Dicke des Zylindermantels und/oder des Kubusmantels, umfasst, der ausgehend von der Zufuhrleitung (17, 17', 17") mit einem grösser werdenden Abstand zu der Zufuhrleitung (17, 17', 17") in zumindest eine Raumrichtung abnimmt, und/oder zumindest ein, insbesondere in dem zweiten Hohlraum (7, 7', 7") zumindest bereichsweise angeordnetes, erstes Leitelement, mittels dem insbesondere das Brennfluid in Richtung der Innenwandung (5, 5', 5") lenkbar ist, umfasst.

9. Nahrungsmittelbehandlungsgerät nach einem der vorangehenden Ansprüche, **gekennzeichnet durch**
zumindest ein zumindest bereichsweise in dem ersten Hohlraum (3, 3', 3") angeordnetes zweites Leitelement, wobei mittels des zweiten Leitelementes das Brennfluid und/oder die Verbrennungsgase in Richtung der Austrittsöffnung (25, 25', 25", 27), in eine Richtung parallel zu zumindest einem Bereich der Innenwandung (5, 5', 5") und/oder von einer dem ersten Hohlraum (3, 3', 3") zugewandten Seite der Innenwandung (5, 5', 5") weg leitbar ist bzw. sind.

10. Nahrungsmittelbehandlungsgerät nach Anspruch 8 oder 9, **dadurch gekennzeichnet, dass**
die Absperrvorrichtung, die Klappe, das Vergleichmässigungselement, das erste Leitelement und/oder das zweite Leitelement zumindest teilweise bewegbar ist bzw. sind, insbesondere mittels der Absperrvorrichtung, des ersten Leitelements und/oder des zweiten Leitelements die der Innenwandung (5, 5', 5"), der Austrittsöffnung, der ersten Austrittsöffnung (25, 25', 25"), der zweiten Austrittsöffnung (27), dem Wärmetauscher, dem Einlass und/oder dem Auslass zugeführte Menge an Brennfluid und/oder Verbrennungsgas veränderbar ist bzw. sind.

11. Nahrungsmittelbehandlungsgerät nach einem der vorangehenden Ansprüche, **dadurch gekennzeichnet, dass**
die Innenwandung (5, 5', 5") zumindest einen, insbesondere formstabilen Formkörper (5a, 5b, 5c) umfasst, wobei der Formkörper (5a, 5b, 5c) mittels zumindest einer Verbindungsvorrichtung an der Außenwandung (9, 9', 9") befestigt ist, wobei die Verbindungsvorrichtung insbesondere in Form eines Deckels (15) zum Verschließen des zweiten Hohlraums (7, 7', 7") ausgebildet ist, wobei vorzugsweise die Innenwandung (5) eine Vielzahl von modular miteinander kombinierbaren Formkörpern (5a, 5b, 5c) umfasst und/oder das Nahrungsmittelbehandlungsgerät zumindest eine zumindest bereichsweise in dem ersten Hohlraum (3, 3', 3") und/oder dem zweiten Hohlraum angeordnete Zündvorrichtung (23) umfasst.

12. Nahrungsmittelbehandlungsgerät nach einem der vorangehenden Ansprüche, **dadurch gekennzeichnet, dass**
die erste Abführleitung, die zweite Abführleitung, der erste Wärmetauscher und/oder der zweite Wärmetauscher zumindest bereichsweise in Form eines Siphons ausgebildet ist bzw. sind und/oder zumindest bereichsweise so ausgebildet ist bzw. sind, dass den Verbrennungsgasen zumindest bereichsweise eine Strömungsrichtung im Wesentlichen in Richtung einer Gravitationskraft aufzwingbar ist, wobei vorzugsweise den Verbrennungsgasen stromabwärts eine Richtungsumkehr aufzwingbar ist, insbesondere den Verbrennungsgasen eine Strömungsrichtung im Wesentlichen entgegen der Gravitationskraft aufzwingbar ist und/oder die erste Abführleitung (51', 63") und/oder die zweite Abführleitung, zumindest bereichsweise thermische isoliert von dem Brenner (1,1',1"), insbesondere der Innenwandung (5, 5', 5") und/oder Außenwandung (9, 9', 9"), ist bzw. sind.

13. Nahrungsmittelbehandlungsgerät nach einem der vorangehenden Ansprüche, **dadurch gekennzeichnet, dass**
die erste Abführleitung (51', 63") und/oder die zweite Abführleitung doppelwandig ausgebildet ist bzw. sind, vorzugsweise zumindest bereichsweise, zumindest eine Leitungsinnenwand (55', 67') und zumindest eine Leitungsaußenwand (57', 65') aufweist bzw. aufweisen, insbesondere die Leitungsinnenwand (55', 67') und die Leitungsaußenwand (57', 65') thermisch isoliert sind und/oder die Leitungsinnenwand (55', 67') einen geringeren Wärmleitkoeffizient aufweist als die Leitungsaussenwand (57', 65'), wobei vorzugsweise im Bereich zwischen der Leitungsinnenwand (55', 67') und der Leitungsaußenwand (57', 65') zumindest ein thermisch isolierendes Material angeordnet ist, insbesondere mittels einer zumindest bereichsweisen Beschichtung der Leitungsinnenwand (55', 67'), vorzugsweise auf der der Leitungsaußenwand (57', 65') zugewandten Oberfläche, und/oder mittels einer zumindest bereichsweisen Beschichtung der Leitungsaußenwand (57', 65'), vorzugsweise auf der der Leitungsinnenwand (55', 67') zugewandten Oberfläche, und/oder
zumindest eine Oberfläche der Leitungsinnenwand (55', 67'), insbesondere der Leitungsaußenwand (57', 65') zugewandte Oberfläche und/oder zumindest eine Oberfläche der Leitungsaußenwand (57', 65'), insbesondere die der Leitungsinnenwand (55', 67') zugewandte Oberfläche, eine reduzierte Wärmestrahlungsemissionsfähigkeit und/oder erhöhte Wärmestrahlungsre- flexionsfahigkeit aufweist bzw. aufweisen, vorzugsweise die Oberfläche bzw. die Oberflächen zumindest bereichsweise poliert ist bzw. sind.

14. Nahrungsmittelbehandlungsgerät nach einem der vorangehenden Ansprüche, **dadurch gekennzeichnet, dass**
die Innenwandung (5, 5', 5"), die Außenwandung (9, 9', 9"), die erste Abführleitung (25, 25', 25"), die zweite Abführleitung (27), die Leitungsinnenwand (55', 67') und/oder die Leitungsaußenwand (57', 65') zumindest ein keramisches Material umfasst bzw. umfassen und/oderdie erste Abführleitung (25, 25', 25") und/oder die zweite Abführleitung (27) zumindest bereichsweise in Form zumindest eines Krümmers ausgebildet ist.

15. Nahrungsmittelbehandlungsgerät nach einem der vorangehenden Ansprüche, **gekennzeichnet durch**
zumindest eine mit dem Brenner (1, 1', 1"), der ersten Austrittsöffnung (25, 25', 25"), der zweiten Austrittsöffnung (27), dem ersten Wärmetauscher, dem zweiten Wärmetauscher, der Absperrvorrichtung, dem Garraum (31), dem Dampferzeuger (33), dem Gebläse (21), dem Vergleichmässigungselement, dem ersten Leitelement, dem zweiten Leitelement und/oder der Zündvorrichtung (23) in Wirkverbindung stehende Steuer- und/oder Regeleinrichtung.

## Claims

1. A food product treatment device, in particular a cooking device (29) for applying hot air and/or steam to at least one product to be cooked, including at least one burner (1, 1', 1") for burning a combustion fluid while generating combustion gases, wherein the burner (1, 1', 1") comprises at least one first hollow chamber (3, 3', 3") and at least one first discharge opening (25, 25', 25 ") which is in fluid communication with the first hollow chamber (3, 3', 3") and at least one second discharge opening (27) which is in fluid communication with the first hollow chamber (3, 3', 3") and at least one first heat exchanger which is operatively connected to the first discharge opening (25, 25', 25") and at least one second heat exchanger which is operatively connected with at least the second discharge opening (27) are provided, **characterized in that** the burner (1, 1', 1 ") comprises an inner wall (5, 5', 5 "), wherein the inner wall (5, 5', 5 ") surrounds at least the first hollow chamber (3, 3', 3") on at least one plane at least in sections, the combustion fluid and/or the combustion gases can be fed to the first hollow chamber (3, 3', 3") through the inner wall (5, 5', 5"), and the first discharge opening (25, 25', 25 ") and the second discharge opening (27) are arranged on essentially opposite sides of the first hollow chamber (3, 3', 3 ").

2. The food product treatment device according to Claim 1, **characterized in that** the combustion fluid within the first hollow chamber (3, 3', 3 ") and/or within the inner wall (5, 5', 5 ") can be burned, particularly for the purpose of generating the combustion gases, in particular, the inner wall (5, 5', 5 ") comprises at least one first material which is permeable for the combustion fluid and/or the combustion gases and in particular comprises at least one ceramic material, in particular the inner wall (5, 5', 5 ") comprises at least one knotted material, at least one porous material, at least one porous matrix, at least one metal sheet, in particular comprising at least one metal and/or a plurality of through openings, and/or at least one meshwork material, wherein preferably the density of the first material and/or the permeability of the first material for the combustion fluid and/or the combustion gases is essentially constant, or the density of the first material increases, at least in sections, towards the first hollow chamber (3, 3', 3 ") and/or the permeability of the first material for the combustion fluid and/or the combustion gases decreases, at least in sections, towards the first hollow chamber (3, 3', 3").

3. The food product treatment device according to Claim 1 or 2, **characterized in that** the combustion gases can be removed from the first hollow chamber (3, 3', 3 ") via the first discharge opening (25, 25', 25 ") and the second discharge opening (27), the first discharge opening (25, 25', 25 ") and/or the second discharge opening (27) is or are formed by at least one opening formed in the first inner wall and/or by an area of the first hollow chamber (3, 3', 3 ") which is not surrounded by the inner wall (5, 5', 5"), and/or the first discharge opening (25, 25', 25 ") and/or the second discharge opening (27) is or are in fluid communication with at least one first removal line (51', 63 ") and/or the second discharge opening (27) is in fluid communication with at least one second removal line.

4. The food product treatment device according to any one of the preceding claims, **characterized in that**
the first removal line (51', 63 ") is operatively connected to the first heat exchanger and/or the second removal line is operatively connected to the second heat exchanger, in particular in fluid communication, and/or
the first heat exchanger and/or the second heat exchanger comprises or comprise at least one inlet and/or at least one outlet, in particular for the combustion gases fed to the heat exchanger from the burner (1, 1', 1 "), wherein preferably, the size of an opening profile of the inlet and/or of the outlet can be modified by means of at least one shut-off device, in particular comprising at least one flap, in particular, the inlet and/or the outlet can be closed, preferably completely closed.

5. The food product treatment device according to any one of the preceding claims, **characterized in that**
hot air can be generated by means of the first heat exchanger within at least one treatment chamber (31) of the food product treatment device (29), and/or by means of the second heat exchanger, steam can be generated, preferably within the treatment chamber (31), in particular the second heat exchanger is comprised, at least in sections, by at least one steam generator (33).

6. The food product treatment device according to any one of the preceding claims, **characterized by**
at least one outer wall (9, 9', 9") which surrounds, at least in sections, the inner wall (5, 5', 5 ") and/or the first hollow chamber (3, 3', 3 ") to form at least one second hollow chamber (7, 7', 7"), wherein in particular the first hollow chamber (3, 3', 3 ") and the second hollow chamber (7, 7', 7") are separated from each other by the inner wall (5, 5', 5 ") and/or
the outer wall (9, 9', 9") is essentially impermeable for the combustion fluid and/or the combustion gases and/or the second hollow chamber (7, 7', 7") is essentially closed, in particular, is essentially delimited on all sides by the inner wall (5, 5', 5 ") and/or the outer wall (9, 9', 9").

7. The food product treatment device according to any one of the preceding claims, **characterized in that**
the combustion fluid can be fed to the inner wall (5, 5', 5 ") via at least one feed line (17, 17', 17"), wherein preferably, the feed line (17, 17', 17") is in fluid communication with the second hollow chamber (7, 7', 7"), in particular the feed line (17, 17', 17") opens out into the second hollow chamber (7, 7', 7") and/or is comprised by the outer wall (9, 9', 9"),
the combustion fluid can be fed to the burner (1, 1', 1 ") at least partially, in particular fully pre-mixed and supported by blowers, in particular the combustion fluid comprises at least one combustion fluid component and the combustion fluid component can be fed to the burner (1, 1', 1 ") by means of at least one blower (21) which is in particular in fluid communication with the feed line (17, 17', 17"), wherein preferably, the combustion fluid component comprises at least one combustion gas such as methane, ethane, propane, butane, ambient air, oxygen and/or hydrogen and/or at least one liquid combustion fluid, in particular in aerosol form, and/or
the inner wall (5, 5', 5 ") is designed, at least in sections, in a cylinder sheath form, in a cup form and/or a cube sheath form and/or the first hollow chamber (3, 3', 3 ") is essentially cylindrical and/or cuboid, wherein the inner wall (5, 5', 5 ") and/or the first hollow chamber (3, 3', 3 ") has or have, at least in sections, a square, circular, elliptical and/or rectangular profile.

8. The food product treatment device according to any one of the preceding claims, **characterized in that**
the outer wall (9, 9', 9") and/or the second hollow chamber (7, 7', 7") essentially concentrically surround(s) the inner wall (5, 5', 5 ") and/or the first hollow chamber (3, 3', 3 ") at least in sections and/or the second hollow chamber (7, 7', 7 ") has, at least in sections, an essentially cylinder sheath- and/or cube sheath-shaped profile, and/or the second hollow chamber (7, 7', 7") comprises at least one homogenizing element, wherein by means of the homogenizing element the combustion fluid can be guided, in particular on all sides, essentially evenly distributed over the inner wall (5, 5', 5 "), into the inner wall (5, 5', 5 ") and/or the first hollow chamber (3, 3', 3"), wherein the homogenizing element comprises at least one distance between the outer wall (9, 9', 9") and the inner wall (5, 5', 5 "), in particular a thickness of the cylinder sheath and/or the cube sheath, which, starting from the feed line (17, 17', 17") decreases as the distance from the feed line (17, 17', 17") increases in at least one spatial direction, and/or comprises at least one first guide element, which is arranged, at least in sections, in particular in the second hollow chamber (7, 7', 7"), by means of which in particular the combustion fluid can be guided in the direction of the inner wall (5,'5', 5 ").

9. The food product treatment device according to any one of the preceding claims, **characterized by**
at least one second guide element, which is arranged, at least in sections, in the first hollow chamber (3, 3', 3 "), wherein by means of the second guide element, the combustion fluid and/or the combustion gases can be guided away in the direction of the discharge opening (25, 25', 25", 27), in a direction parallel to at least one section of the inner wall (5, 5', 5 ") and/or from a side of the inner wall (5,5',5") facing towards the first hollow chamber (3, 3', 3").

10. The food product treatment device according to Claim 8 or 9, **characterized in that** the shut-off device, the flap, the homogenizing element, the first guide element and/or the second guide element is or are at least partially movable, in particular the quantity of combustion fluid and/or combustion gas fed to the inner wall (5,5',5"), the discharge opening, the first discharge opening (25, 25', 25 "), the second discharge opening (27), the heat exchanger, the inlet and/or the outlet is or are modifiable by means of the shut-off device, the first guide element and/or the second guide element.

11. The food product treatment device according to any one of the preceding claims, **characterized in that**
the inner wall (5, 5', 5 ") comprises at least one, in particular stable, molded body (5a, 5b, 5c), wherein the molded body (5a, 5b, 5c) is attached to the outer wall (9, 9', 9") by means of at least one connecting device, wherein the connecting device is designed in particular in the form of a lid (15) for closing the second hollow chamber (7, 7', 7"), wherein preferably, the inner wall (5) comprises a plurality of molded bodies (5a, 5b, 5c) which can be modularly combined with each other and/or the food product treatment device comprises at least one ignition device (23) which is arranged, at least in sections, in the first hollow chamber (3, 3', 3 ") and/or the second hollow chamber.

12. The food product treatment device according to any one of the preceding claims, **characterized in that**
the first removal line, the second removal line, the first heat exchanger and/or the second heat exchanger is or are designed, at least in sections, in the form of a siphon and/or is or are designed, at least in sections, in such a manner that, at least in sections, a direction of flow essentially in the direction of a gravitational force can be imposed upon the combustion gases, wherein preferably a directional change can be imposed on the combustion gases at a downstream location, in particular a direction of flow which is essentially against the force of gravity can be imposed on the combustion gases and/or the first removal line (51', 63 ") and/or the second removal line is or are thermally insulated from the burner (1, 1', 1 ") at least in sections, in particular from the inner wall (5, 5', 5 ") and/or the outer wall (9,9',9").

13. The food product treatment device according to any one of the preceding claims, **characterized in that**
the first removal line (51', 63") and/or the second removal line is or are designed with a double wall, preferably at least in sections, comprises or comprise at least one line inner wall (55', 67') and at least one line outer wall (57', 65'), in particular the line inner wall (55', 67') and the line outer wall (55', 65') are thermally insulated and/or the line inner wall (55', 67') has a lower thermal conduction coefficient than the line outer wall (55', 65'), wherein preferably in the area between the line inner wall (55', 67') and the line outer wall (57', 65') at least one thermally insulating material is arranged, particularly by means of a coating of the line inner wall (55', 67') at least in sections, preferably on the surface facing towards the line outer wall (57', 65') and/or by means of a coating of the line outer wall (57', 65') at least in sections, preferably on the surface facing towards the line inner wall (55', 67'), and/or
at least one surface of the line inner wall (55', 67'), in particular the surface facing towards the line outer wall (57', 65') and/or at least one surface of the line outer wall (57', 65'), in particular the surface facing towards the line inner wall (55', 67') has or have a reduced thermal radiation emission capability and/or increased thermal radiation reflective capability, and preferably the surface or surfaces is or are polished at least in sections.

14. The food product treatment device according to any one of the preceding claims, **characterized in that**
the inner wall (5, 5', 5 "), the outer wall (9,9',9"), the first removal line (25, 25', 25"), the second removal line (27), the line inner wall (55', 67') and/or the line outer wall (57', 65') comprises or comprise at least one ceramic material and/or the first removal line (25, 25', 25 ") and/or the second removal line (27) is/are designed, at least in sections, in the form of at least one elbow.

15. The food product treatment device according to any one of the preceding claims, **characterized by**
at least one control and/or regulating device which is operatively connected to the burner (1, 1', 1"), the first discharge opening (25, 25', 25 "), the second discharge opening (27), the first heat exchanger, the second heat exchanger, the shut-off device, the cooking chamber (31), the steam generator (33), the blower (21), the homogenizing element, the first guide element, the second guide element and/or the ignition device (23).

## Revendications

1. Appareil de traitement de produits alimentaires, en particulier appareil de cuisson (29) pour soumettre au moins un produit à cuire à de l'air chaud et/ou de la vapeur, comprenant au moins un brûleur (1, 1',1") destiné à une combustion d'un fluide combustible avec production de gaz de combustion, où le brûleur (1, 1' 1") comprend au moins un premier espace vide (3, 3', 3 "), et où sont prévus au moins un premier orifice de sortie (25, 25', 25 ") se trouvant en liaison fluidique avec le premier espace vide (3, 3', 3 ") et au moins un second orifice de sortie (27) se trouvant en liaison fluidique avec le premier espace vide (3, 3', 3 ") et au moins un premier échangeur de chaleur se trouvant en liaison fonctionnelle avec le premier orifice de sortie (25, 25', 25") et au moins un second échangeur de chaleur se trouvant en liaison fonctionnelle avec au moins le second orifice de sortie (27), **caractérisé en ce que**
le brûleur (1, 1' 1") comprend une paroi intérieure (5, 5', 5 "), où la paroi intérieure (5, 5', 5 ") entoure de manière circulaire au moins par secteurs dans au moins un plan au moins le premier espace vide (3, 3', 3 "), le fluide combustible et/ou les gaz de combustion peut ou peuvent être amené(s) au premier espace vide (3, 3', 3 ") à travers la paroi intérieure (5, 5', 5 "), et le premier orifice de sortie (25, 25', 25 ") et le second orifice de sortie (27) sont agencés sur des côtés essentiellement opposés du premier espace vide (3, 3', 3 ").

2. Appareil de traitement de produits alimentaires selon la revendication 1, **caractérisé en ce que**
le fluide combustible peut être brûlé à l'intérieur du premier espace vide (3, 3', 3 ") et/ou à l'intérieur de la paroi intérieure (5, 5', 5 "), en particulier pour produire les gaz de combustion, la paroi intérieure (5, 5', 5 ") comprend en particulier au moins un premier matériau perméable au fluide combustible et/ou aux gaz de combustion, en particulier comprenant au moins un matériau céramique, en particulier la paroi intérieure (5, 5', 5 ") comprend en particulier au moins un matériau en maille, au moins un matériau poreux, au moins une matrice poreuse, au moins une tôle, en particulier comprenant au moins un métal et/ou une pluralité d'ouvertures traversantes, et/ou au moins un matériau tressé, où la densité du premier matériau et/ou la perméabilité du premier matériau envers le fluide combustible et/ou les gaz de combustion est ou sont de manière préférée essentiellement constante(s) ou la densité du premier matériau augmente au moins par secteurs en direction du premier espace vide (3, 3', 3 ") et/ou la perméabilité du premier matériau envers le fluide combustible et/ou les gaz de combustion diminue au moins par secteurs en direction du premier espace vide (3, 3', 3 ").

3. Appareil de traitement de produits alimentaires selon la revendication 1 ou 2, **caractérisé en ce que**
les gaz de combustion peuvent être éliminés du premier espace vide (3, 3', 3 ") par l'intermédiaire du premier orifice de sortie (25, 25', 25 ") et du second orifice de sortie (27), le premier orifice de sortie (25, 25', 25 ") et/ou le second orifice de sortie (27) est ou sont formé(s) à travers au moins un orifice réalisé dans la première paroi intérieure et/ou à travers un secteur du premier espace vide (3, 3', 3 ") non entouré par la paroi intérieure (5, 5', 5 "), et/ou le premier orifice de sortie (25, 25', 25 ") et/ou le second orifice de sortie (27) se trouve en liaison fluidique avec au moins une première conduite d'évacuation (51', 63 ") et/ou le second orifice de sortie (27) se trouve en liaison fluidique avec au moins une seconde conduite d'évacuation.

4. Appareil de traitement de produits alimentaires selon l'une quelconque des revendications précédentes, **caractérisé en ce que**
la première conduite d'évacuation (51', 63 ") est en liaison fonctionnelle, en particulier en liaison fluidique, avec le premier échangeur de chaleur et/ou la seconde conduite d'évacuation est en liaison fonctionnelle, en particulier en liaison fluidique, avec le second échangeur de chaleur et/ou
le premier échangeur de chaleur et/ou le second échangeur de chaleur comprend ou comprennent au moins une admission et/ou au moins un échappement, en particulier pour les gaz de combustion acheminés pour l'échangeur de chaleur depuis le brûleur (1, 1', 1"), où de préférence la taille d'une section de passage de l'admission et/ou de l'échappement peut être modifiée au moyen d'au moins un dispositif d'obturation, en particulier comprenant au moins un clapet, l'admission et/ou l'échappement pouvant en particulier être fermé(s), de préférence complètement.

5. Appareil de traitement de produits alimentaires selon l'une quelconque des revendications précédentes, **caractérisé en ce que**
de l'air chaud peut être produit à l'intérieur d'au moins un espace de traitement (31) de l'appareil de traitement de produits alimentaires (29) au moyen du premier échangeur de chaleur et/ou de la vapeur peut-être produite, de préférence à l'intérieur de l'espace de traitement (31), au moyen du second échangeur de chaleur, le second échangeur de chaleur faisant en particulier partie au moins par secteurs d'au moins un générateur de vapeur (33).

6. Appareil de traitement de produits alimentaires selon l'une quelconque des revendications précédentes, **caractérisé par**
au moins une paroi extérieure (9, 9', 9") entourant au moins par secteurs la paroi intérieure (5, 5', 5 ") et/ou le premier espace vide (3, 3', 3 ") avec formation d'au moins un second espace vide (7, 7', 7"), où en particulier le premier espace vide (3, 3', 3 ") et le second espace vide (7, 7', 7") sont séparés l'un de l'autre par la paroi intérieure (5, 5', 5 ") et/ou
la paroi extérieure (9, 9', 9") est essentiellement imperméable au fluide combustible et/ou aux gaz de combustion et/ou le second espace vide (7, 7', 7") est essentiellement fermé, en particulier est délimité essentiellement de tout côté par la paroi intérieure (5, 5', 5") et/ou par la paroi extérieure (9, 9', 9").

7. Appareil de traitement de produits alimentaires selon l'une quelconque des revendications précédentes, **caractérisé en ce que**
le fluide combustible peut être amené à la paroi intérieure (5, 5', 5 ") au moyen d'au moins une conduite d'alimentation (17, 17', 17"), où la conduite d'alimentation (17, 17', 17") se trouve de préférence en liaison fluidique avec le second espace vide (7, 7', 7"), en particulier la conduite d'alimentation (17, 17', 17") débouche dans le second espace vide (7, 7', 7") et/ou fait partie de la paroi extérieure (9, 9', 9"),
le fluide combustible peut être amené au brûleur (1, 1' 1") au moins partiellement, en particulier avec un prémélange, avec l'assistance d'une soufflerie, le fluide combustible comprend en particulier au moins un composant de fluide combustible et le composant de fluide combustible peut être amené au brûleur (1,1',1") au moyen d'au moins une soufflerie (21), en particulier se trouvant en liaison fluidique avec la conduite d'alimentation (17, 17', 17"), où de préférence
le composant de fluide combustible comprend au moins un gaz combustible, comme du méthane, de l'éthane, du propane, du butane, de l'air ambiant, de l'oxygène et/ou de l'hydrogène, et/ou au moins un fluide combustible liquide, en particulier sous une forme aérosol, et/ou
la paroi intérieure (5, 5', 5") est réalisée au moins par secteurs en forme d'enveloppe de cylindre, en forme de pot et/ou en forme d'enveloppe de cube et/ou le premier espace vide (3, 3', 3") est formé de manière essentiellement cylindrique et/ou cubique, où la paroi intérieure (5, 5', 5") et/ou le premier espace vide (3, 3', 3") présente(nt) au moins par secteurs une forme en coupe transversale qui est carrée, circulaire, elliptique et/ou rectangulaire.

8. Appareil de traitement de produits alimentaires selon l'une quelconque des revendications précédentes, **caractérisé en ce que**
la paroi extérieure (9, 9', 9") et/ou le second espace vide (7, 7', 7") entoure(nt) de manière essentiellement concentrique au moins par secteurs la paroi intérieure (5, 5', 5 ") et/ou le premier espace vide (3, 3', 3 "), et/ou le second espace vide (7, 7', 7") présente au moins par secteurs une forme en coupe transversale qui est essentiellement en forme d'enveloppe de cylindre et/ou en forme d'enveloppe de cube, et/ou
le second espace vide (7, 7', 7") comprend au moins un élément d'homogénéisation, où le fluide combustible peut être guidé au moyen de l'élément d'homogénéisation pour être réparti, en particulier de tous côtés, dans la paroi intérieure (5, 5', 5 ") et/ou le premier espace vide (3, 3', 3 ") de manière essentiellement régulière pour l'ensemble de la paroi intérieure (5, 5', 5 "), où l'élément d'homogénéisation comprend au moins un espacement entre la paroi extérieure (9, 9', 9") et la paroi intérieure (5, 5', 5 "), en particulier une épaisseur de l'enveloppe de cylindre et/ou de l'enveloppe de cube, ledit espacement allant décroissant au moins en direction d'un espace à partir de la conduite d'alimentation (17, 17', 17"), avec un espacement allant croissant par rapport à la conduite d'alimentation (17, 17', 17"), et/ou comprend au moins un premier élément de guidage, en particulier agencé au moins par secteurs dans le second espace vide (7, 7', 7"), au moyen duquel le fluide combustible peut être en particulier dirigé en direction de la paroi intérieure (5, 5', 5 ").

9. Appareil de traitement de produits alimentaires selon l'une quelconque des revendications précédentes, **caractérisé par**
au moins un second élément de guidage agencé au moins par secteurs dans le premier espace vide (3, 3', 3 "), où le fluide combustible et/ou les gaz de combustion peut ou peuvent être guidés au moyen du second élément de guidage en direction de l'orifice de sortie (25, 25', 25", 27), dans une direction parallèle à au moins un secteur de la paroi intérieure (5, 5', 5") et/ou en s'éloignant d'un côté de la paroi intérieure (5, 5', 5 ") qui est tourné vers le premier espace vide (3, 3', 3 ").

10. Appareil de traitement de produits alimentaires selon la revendication 8 ou 9, **caractérisé en ce que**
le dispositif d'obturation, le clapet, l'élément d'homogénéisation, le premier élément de guidage et/ou le second élément de guidage peut ou peuvent être déplacé(s) au moins partiellement, en particulier la ou les quantité(s) de fluide combustible et/ou de gaz de combustion amenée(s) à la paroi intérieure (5, 5', 5 "), à l'orifice de sortie, au premier orifice de sortie (25, 25', 25"), au second orifice de sortie (27), à l'échangeur de chaleur, à l'admission et/ou à l'échappement peut ou peuvent être modifiée(s) au moyen du dispositif d'obturation, du premier élément de guidage et/ou du second élément de guidage.

11. Appareil de traitement de produits alimentaires selon l'une quelconque des revendications précédentes, **caractérisé en ce que**
la paroi intérieure (5, 5', 5 ") comprend au moins un corps moulé (5a, 5b, 5c) en particulier de forme stable, où le corps moulé (5a, 5b, 5c) est fixé sur la paroi extérieure (9, 9', 9") au moyen d'au moins un dispositif de raccordement, où le dispositif de raccordement est réalisé en particulier sous la forme d'un bouchon (15) destiné à fermer le second espace vide (7, 7', 7"), où la paroi intérieure (5) comprend de préférence une pluralité de corps moulés (5a, 5b, 5c) pouvant être combinés les uns avec les autres de manière modulaire et/ou l'appareil de traitement de produits alimentaires comprend au moins un dispositif d'allumage (23) agencé au moins par secteurs dans le premier espace vide (3, 3', 3 ") et/ou le second espace vide.

12. Appareil de traitement de produits alimentaires selon l'une quelconque des revendications précédentes, **caractérisé en ce que**
la première conduite d'évacuation, la seconde conduite d'évacuation, le premier échangeur de chaleur et/ou le second échangeur de chaleur est ou sont réalisé(s) au moins par secteurs sous la forme d'un siphon et/ou est ou sont réalisé(s) au moins par secteurs de manière à ce qu'une direction de flux soit imposée au moins par secteurs aux gaz de combustion essentiellement dans le sens de la force de gravitation, où une inversion de direction est de préférence imposée aux gaz de combustion en aval du flux, une direction de flux est en particulier imposée aux gaz de combustion essentiellement à l'encontre de la force de gravitation et/ou la première conduite d'évacuation (51', 63 ") et/ou la seconde conduite d'alimentation est ou sont, au moins par secteurs, thermiquement isolée(s) du brûleur (1, 1' 1"), en particulier de la paroi intérieure (5, 5', 5 ") et/ou de la paroi extérieure (9, 9', 9").

13. Appareil de traitement de produits alimentaires selon l'une quelconque des revendications précédentes, **caractérisé en ce que**
la première conduite d'évacuation (51', 63") et/ou la seconde conduite d'évacuation est ou sont réalisée(s) avec une double paroi, de préférence présente ou présentent au moins par secteurs au moins une paroi intérieure de conduite (55', 67') et au moins une paroi extérieure de conduite (57', 65'), la paroi intérieure de conduite (55', 67') et la paroi extérieure de conduite (57', 65') sont en particulier thermiquement isolées et/ou la paroi intérieure de conduite (55', 67') présente un coefficient de conductibilité thermique plus faible que la paroi extérieure de conduite (57', 65'), où au moins un matériau thermiquement isolant est agencé de préférence dans un secteur situé entre la paroi intérieure de conduite (55', 67') et la paroi extérieure de conduite (57', 65'), en particulier au moyen d'un revêtement au moins par secteurs de la paroi intérieure de conduite (55', 67'), de préférence sur la surface tournée vers la paroi extérieure de conduite (57', 65') et/ou au moyen d'un revêtement au moins par secteurs de la paroi extérieure de conduite (57', 65'), de préférence sur la surface tournée vers la paroi intérieure de conduite (55', 67'), et/ou
au moins une surface de la paroi intérieure de conduite (55', 67'), en particulier la surface tournée vers la paroi extérieure de conduite (57', 65') et/ou au moins une surface de la paroi extérieure de conduite (57', 65'), en particulier la surface tournée vers la paroi intérieure de conduite (55', 67') présente ou présentent une capacité d'émission de rayonnement thermique réduite et/ou une capacité de réflexion de rayonnement thermique augmentée, la surface ou les surfaces étant de préférence polie(s) au moins par secteurs.

14. Appareil de traitement de produits alimentaires selon l'une quelconque des revendications précédentes, **caractérisé en ce que**
la paroi intérieure (5, 5', 5 "), la paroi extérieure (9, 9', 9"), la première conduite d'évacuation (25, 25', 25"), la seconde conduite d'évacuation (27), la paroi intérieure de conduite (55', 67') et/ou la paroi extérieure de conduite (57', 65') comprend ou comprennent au moins un matériau céramique et/ou la première conduite d'évacuation (25, 25', 25 ") et/ou la seconde conduite d'évacuation (27) est ou sont réalisée(s) au moins par secteurs sous la forme d'au moins un tube coudé.

15. Appareil de traitement de produits alimentaires selon l'une quelconque des revendications précédentes, **caractérisé par**
au moins un dispositif de commande et/ou régulation se trouvant en liaison fonctionnelle avec le brûleur (1, 1', 1"), le premier orifice de sortie (25, 25', 25 "), le second orifice de sortie (27), le premier échangeur de chaleur, le second échangeur de chaleur, le dispositif d'obturation, l'espace de cuisson (31), le générateur de vapeur (33), la soufflerie (21), l'élément d'homogénéisation, le premier élément de guidage, le second élément de guidage et/ou le dispositif d'allumage (23).
